# EUROPÄISCHE PATENTSCHRIFT

(11) **EP 4 186 828 B1**
(45) Veröffentlichungstag und Bekanntmachung des Hinweises auf die Patenterteilung: **01.05.2024**
(21) Anmeldenummer: 21211238.7
(22) Anmeldetag: 30.11.2021
(51) Int. Cl.: B65G 47/08

(54) **VORRICHTUNG UND VERFAHREN ZUM ZUSAMMENSTELLEN VON STÜCKGUTLAGEN**
DEVICE AND METHOD FOR ASSEMBLING SETS OF PIECE GOODS
DISPOSITIF ET PROCÉDÉ DE REGROUPEMENT DE COUCHES DE COLIS

(43) Veröffentlichungstag der Anmeldung: 31.05.2023
(73) Patentinhaber: Statec Binder GmbH, 8200 Gleisdorf (AT)
(72) Erfinder: Repnegg, Gerold, 8611 Sankt Katharein (AT); Heiling, Florian, 8225 Pöllau (AT)
(74) Vertreter: KLIMENT & HENHAPEL

(56) Entgegenhaltungen:
- WO-A1-2019/076708
- DE-A1- 10 111 680
- DE-A1-102017 118 928

## Beschreibung

### GEBIET DER ERFINDUNG

Die Erfindung betrifft eine Vorrichtung für das Zusammenstellen von Stückgutlagen mittels Stückgüter aus wenigstens zwei Reihen von Stückgütern, vorzugsweise zur Herstellung von mindestens einem Stückgutstapel mit mehreren Stückgutlagen, wobei die Vorrichtung umfasst:
- eine Übergabevorrichtung mit einer Übergabefläche für das Zusammenstellen einer Stückgutlage aus einer Anzahl von Stückgütern der ersten Stückgutreihe und einer Anzahl von Stückgütern der zweiten Stückgutreihe;
- eine erste Zufuhrvorrichtung für die Zufuhr der Anzahl von Stückgütern der ersten Stückgutreihe an eine erste Zufuhrposition, wobei die erste Zufuhrposition benachbart ist zu einem ersten Seitenrand der Übergabefläche;
- eine Schiebevorrichtung mit einem ersten Abschieber, wobei der erste Abschieber zum Schieben der Anzahl von Stückgütern der ersten Stückgutreihe von der ersten Zufuhrposition in eine erste Übergabeposition auf der Übergabefläche eingerichtet ist;
- zumindest eine zweite Zufuhrvorrichtung für die Zufuhr der Anzahl von Stückgütern der zumindest einer zweiten Stückgutreihe an eine zweite Zufuhrposition vorgesehen ist, wobei die zweite Zufuhrposition benachbart ist zu einem zweiten Seitenrand der Übergabefläche, wobei der zweite Seitenrand unterschiedlich ist zum ersten Seitenrand der Übergabefläche, und wobei die Schiebevorrichtung zumindest einen zweiten Abschieber umfasst, der zum Schieben der zumindest einen zweiten Stückgutreihe von der zweiten Zufuhrposition in eine zweite Übergabeposition auf der Übergabefläche eingerichtet ist; und wobei
- eine erste Schubrichtung des ersten Abschiebers zum Schieben einer Anzahl von Stückgütern der ersten Stückgutreihe von der ersten Zufuhrposition in die erste Übergabeposition auf der Übergabefläche entgegengesetzt orientiert ist zu einer zweiten Schubrichtung des zumindest einen zweiten Abschiebers zum Schieben einer Anzahl von Stückgütern der zumindest einen zweiten Stückgutreihe von der zweiten Zufuhrposition in die zweite Übergabeposition auf der Übergabefläche.

Außerdem wird im Rahmen der Erfindung ein neuartiges Verfahren zum Zusammenstellen von Stückgutlagen mittels Stückgüter aus wenigstens zwei Reihen von Stückgütern auf einer Übergabefläche angegeben.

### STAND DER TECHNIK

Stückgüter und insbesondere Säcke werden häufig zu bestimmten Packeinheiten zusammengefasst und dazu beispielsweise in mehreren Lagen gemeinsam auf Transportpaletten gestapelt, je nach Bedarf gemeinsam in eine Transportschutzfolie gehüllt und anschließend gelagert oder weiter transportiert. Das Stapeln solcher Stückgüter erfolgt üblicherweise mittels sogenannter Palettierer. Wesentlicher Bestandteil derartiger Palettierer ist eine Vorrichtung für das Zusammenstellen von Stückgutlagen, die in weiterer Folge auf eine Hubvorrichtung, welche eine Palette trägt, nacheinander abgelegt werden.

Konkret wird dabei mittels der Vorrichtung für das Zusammenstellen von Stückgutlagen eine bestimmte Anzahl an Stückgütern zunächst als eine Stückgutlage mit einem bestimmten Lagenbild angeordnet und anschließend wird diese Stückgutlage auf eine Transportpalette überführt. Daran anschließend kann eine weitere Stückgutlage mit einem weiteren Lagenbild zusammengestellt werden, wobei diese weitere Stückgutlage anschließend auf die vorhergehende Lage auf der Palette gestapelt wird.

Abhängig von der Beschaffenheit des zu stapelnden Stückgutes, von der Anzahl der übereinander zu stapelnden Stückgutlagen sowie von der Anforderung an die Stabilität der übereinander gestapelten Stückgutlagen auf der jeweiligen Palette können die einzelnen Stückgutlagen bzw. deren jeweilige Lagenbilder beispielsweise zueinander gedreht oder quer zueinander aufeinander gestapelt werden. Solcherart können Stückgutstapel mit mehreren Stückgutlagen mit jeweils unterschiedlichen Lagenbildern oder mit alternierend wechselnden Lagenbildern auf einer Palette abgelegt werden, wobei die Stückgutstapel relativ stabil sind und bei denen das Stückgut möglichst fugenlos nebeneinander bzw. übereinander gestapelt ist.

Bei aus dem Stand der Technik bekannten Vorrichtungen für das Zusammenstellen von Stückgutlagen wird dazu üblicherweise eine erste Stückgutreihe mit einem Zufuhrband von einer Seite auf eine Schiebefläche der Vorrichtung für das Zusammenstellen der Stückgutlagen befördert. Anschließend ist es meist erforderlich, mit einem Schieber die auf die Schiebefläche eingebrachte erste Stückgutreihe um eine Position weiterzuschieben, um mit demselben Zufuhrband seriell eine weitere, zweite Stückgutreihe und gegebenenfalls danach noch zumindest eine zusätzliche, dritte und/oder vierte Stückgutreihe zur Bildung einer Stückgutlage ebenfalls auf die Schiebefläche befördern zu können. Auf der Schiebefläche werden solcherart gegebenenfalls unter mehrfacher zwischenzeitlicher Betätigung des Schiebers zum Verschieben der Stückgutreihen die zwei oder mehreren hintereinander eingebrachten Stückgutreihen zu einer Stückgutlage mit zwei oder mehreren nebeneinander liegenden Stückgutreihen angeordnet. Die zwei oder mehreren nebeneinander angeordneten Stückgutreihen, die somit entsprechend einer Stückgutlage gemeinsam auf der Schiebefläche angeordnet sind, können daraufhin vom Schieber gemeinsam auf eine Übergabefläche weiter verschoben werden. Durch geeignetes Öffnen von Entladeöffnungen in der Übergabefläche kann abschließend die Stückgutlage an eine unterhalb der Übergabefläche befindliche Palette übergeben werden.

Nachteilig an solchen aus dem Stand der Technik bekannten Vorrichtung für das Zusammenstellen von Stückgutlagen ist zumindest, dass die serielle Zufuhr der zwei oder mehr Stückgutreihen, die gemeinsam eine Stückgutlage bilden, mit einem einzigen Zufuhrband hintereinander auf die Schiebefläche zeitaufwendig ist. Ein weiterer zeitlicher Nachteil ist aufgrund der mehrfach erforderlichen, zwischenzeitlichen Betätigung des Schiebers gegeben, um die seriell auf die Schiebefläche eingebrachten zwei oder mehreren Stückgutreihen in jeweils geeigneter Weise zu einer Stückgutlage mit nebeneinander liegenden Stückgutreihen zu verschieben.

Um bei größeren Palettierern die Stapelleistung des pro Zeiteinheit, beispielsweise pro Betriebsstunde, gestapelten Stückgutes zu erhöhen, sind dazu Vorrichtungen bekannt geworden, bei denen die Zufuhr der einzelnen Stückgutreihen mit den dazu erforderlichen Fördereinrichtungen, wie beispielsweise von Drehstationen zum Drehen von Stückgut sowie von entsprechenden Zufuhrbändern, jeweils doppelt ausgeführt sind. Die Zufuhr der Stückgutreihen erfolgt in diesem Fall im Parallel-Betrieb jeweils von derselben Seite auf die Schiebefläche. Durch eine solche parallele Zufuhr können gleichzeitig zwei Stückgutreihen nebeneinander auf die Schiebefläche befördert werden, was zu einer Zeitersparnis führt.

Als Nachteil ist den vorgenannten Ausführungsvarianten von Vorrichtungen für das Zusammenstellen von Stückgutlagen jedoch gemein, dass das Verschieben der aus zwei oder mehreren nebeneinander liegenden Stückgutreihen gebildeten, gesamten Stückgutlage jeweils mittels eines gemeinsamen Schiebers von der Schiebefläche auf die Übergabefläche erfolgt. Dabei wird von dem einen Schieber nachteilig gleichzeitig Stückgut auf Stückgut der zwei oder mehreren nebeneinander liegenden Stückgutreihen der gesamten Stückgutlage von der Schiebefläche abgeschoben, weshalb es zu Beschädigungen und Deformationen des Stückguts kommen kann. Insbesondere bei schwerem Füllmaterial, bei sehr feinem, pulverförmigen Füllgut oder bei kubisch geformtem, sehr rutschigen Füllgut, mit dem die Stückguteinheiten befüllt sind, beispielsweise in Form von befüllten Säcken, die als Stückgut gestapelt werden sollen, kann es solcherart beim gemeinsamen Verschieben von Säcken, die wiederum benachbarte Säcke weiterschieben müssen, aufgrund der Haftreibung der aufgelegten Säcke zu Deformationen Beschädigungen einzelner Säcke führen.

Überdies wird aufgrund des gemeinsamen Abschiebens einer gesamten Stückgutlage mit einem gemeinsamen bzw. einem einzigen Schieber die Palettierqualität insgesamt verschlechtert, da das Lagenbild einer solchen gemeinsam verschobenen Stückgutlage meist unregelmäßig ist und unerwünschte Fugen und Freiräume zwischen benachbarten Stückguteinheiten aufweisen kann. Einzelne Stückguteinheiten können dabei nur unzureichend innerhalb der betreffenden Stückgutlage fixiert sein, weshalb einzelne Stückgutlagen zueinander verschoben sein können und ein solcher Stückgutstapel nur eine unzureichende Stabilität für den weiteren Transport aufweist.

Unter dem Begriff der Palettierqualität versteht man die Güte, mit der ein Stückgutstapel mit mehreren Stückgutlagen auf einer Palette abgelegt wird, wobei die einzelnen Stückgutlagen gegebenenfalls als zwei oder mehrere Stückgutlagen möglichst stabil übereinander gestapelt sein können und bei denen das Stückgut möglichst fugenlos nebeneinander bzw. übereinander gestapelt ist.

Beispielsweise sind aus den Druckschriften DE 2017 118 928 A1 sowie WO 2019/076708 A1 Vorrichtungen für das Zusammenstellen von Stückgutlagen bekannt geworden, bei denen auch zwei oder drei Stückgutreihen jeweils von derselben Seite aus in orthogonaler Formation in Bezug zu einer Förderfläche an ein und denselben Seitenrand der Förderfläche antransportiert werden, um anschließend von diesem Seitenrand aus von einem Manipulator in Form eines Portal-Roboters bzw. Kinematik-Roboters stückgutweise klemmend, kraftschlüssig und/oder formschlüssig erfasst zu werden und auf eine räumlich von der Formation der jeweiligen Stückgutreihe abgetrennte Position auf der Förderfläche positioniert zu werden. Diese Ausführungen sind jedoch aufgrund des erforderlichen Einsatzes eines Roboter-Manipulators sowohl zeitaufwendig, als auch kostenintensiv.

Weiters ist aus der Druckschrift DE 101 11 680 A1 eine Vorrichtung zum Palettieren von Stückgütern zu einem Stückgutstapel bekannt geworden, bei der zwei Stückgutzeilen gleichzeitig von zwei einander gegenüberliegenden Seitenrändern aus auf ein dazwischen angeordnetes Lagentragband verschoben werden. Gemeinsam mit zwei weiteren Stückgutzeilen, die jeweils seitlich neben die beiden mittig auf dem Lagentragband angeordneten Stückgutzeilen positioniert werden, wird diese Stückgutlage, die aus vier nebeneinander angeordneten Stückgutreihen gebildet ist, mittels mehrerer paralleler Förderbänder auf ein zusätzliches, nachgeordnetes Förderband weitergefördert, nachdem zuvor zwei Anschläge, die gegen den Strom der Stückgüter gerichtet sind, in seitlicher Richtung aus dem Bewegungsbereich der fertigen Stückgutlage bewegt wurden. Auch bei dieser Ausführung können unerwünschte Fugen und Freiräume zwischen den Stückgütern einzelner Stückgutzeilen nur dann verringert werden, wenn die auf den mehreren parallelen Förderbändern befindlichen Stückgutzeilen jeweils gegen die quer zum Strom der Stückgüter orientierten, geschlossenen Anschläge gefördert werden, was jedoch zu Beschädigungen der Stückgutverpackungen führt.

### AUFGABE DER ERFINDUNG

Es ist somit Aufgabe der Erfindung, die vorgenannten Nachteile des Stands der Technik bei Vorrichtungen zum Zusammenstellen von Stückgutlagen zu überwinden und dazu eine Vorrichtung für das Zusammenstellen von Stückgutlagen mittels Stückgüter aus wenigstens zwei Reihen von Stückgütern vorzuschlagen, mit der sehr rasch und effizient Stückgutlagen zusammengestellt werden können, wobei deren Lagenbild möglichst regelmäßig ist und keine unerwünschten Fugen und Freiräume zwischen den die Stückgutlage bildenden Stückgütern aufweist. Überdies ist es eine der Aufgaben der Erfindung, eine Vorrichtung für das Zusammenstellen von Stückgutlagen mittels Stückgüter aus wenigstens zwei Reihen von Stückgütern vorzuschlagen, die im Falle des Einsatzes im Zusammenhang mit Palettierern zur Herstellung von mindestens einem Stückgutstapel mit mehreren Stückgutlagen geeignet ist, und mit der einerseits die Stapelleistung von derzeit bekannten derartigen Vorrichtungen weiter gesteigert und mit der andererseits in weiterer Folge die Palettierqualität weiter verbessert werden kann, um möglichst rasch und zugleich möglichst schonend Stückgutlagen zu entsprechenden Stückgutstapeln aufstapeln zu können. Eine weitere Aufgabe der Erfindung besteht darin, ein neuartiges Verfahren zum Zusammenstellen von Stückgutlagen aus wenigstens zwei Reihen von Stückgütern auf einer Übergabefläche vorzuschlagen.

### DARSTELLUNG DER ERFINDUNG

Diese Aufgaben werden von einer eingangs genannten Vorrichtung für das Zusammenstellen von Stückgutlagen erfindungsgemäß dadurch gelöst, dass die Schiebevorrichtung weiters einen ersten Ausrichtschieber sowie einen zweiten Ausrichtschieber zum seitlichen Ausrichten der auf der Übergabefläche aufgelegten Stückgüter umfasst, wobei der erste Ausrichtschieber entlang eines dritten Seitenrands der Übergabefläche und der zweite Ausrichtschieber entlang eines dem dritten Seitenrand gegenüberliegenden vierten Seitenrands (158) der Übergabefläche (152) angeordnet sind, und wobei die beiden Ausrichtschieber (176, 178) in zueinander entgegengesetzten Richtungen (AU1, AU2) verfahrbar sind.

Erfindungsgemäß umfasst die Vorrichtung für das Zusammenstellen von Stückgutlagen zumindest eine zweite Zufuhrvorrichtung für die Zufuhr der Anzahl von Stückgütern zumindest einer zweiten Stückgutreihe an eine zweite Zufuhrposition, die von der ersten Zufuhrposition unterschiedlich ist. Mit der zweiten Zufuhrvorrichtung wird gewährleistet, dass Stückgüter der zweiten Stückgutreihe unabhängig von Stückgütern der ersten Stückgutreihe an eine zweite Zufuhrposition an einem zweiten Seitenrand der Übergabefläche der Übergabevorrichtung befördert werden, wobei die zweite Zufuhrposition benachbart ist zu einem zum ersten Seitenrand unterschiedlichen zweiten Seitenrand der Übergabefläche. Der zweite Seitenrand der Übergabefläche, zu dem die zweite Zufuhrposition benachbart ist, bildet einen vom ersten Seitenrand unterschiedlichen Randabschnitt der Übergabefläche.

Die Übergabefläche kann vorzugsweise quadratisch oder rechtwinkelig gestaltet sein. Der zweite Seitenrand kann dem ersten Seitenrand gegenüberliegen. In diesem Fall ist die zweite Zufuhrposition benachbart zu dem der ersten Zufuhrposition gegenüberliegenden, zweiten Seitenrand. Außerdem kann die zweite Zufuhrposition vorzugsweise parallel zum zweiten Seitenrand anliegen, was den Vorteil bietet, dass die eine zweite Stückgutreihe bildenden Stückguteinheiten in der zweiten Zufuhrposition jeweils möglichst nahe entlang des zweiten Seitenrands sowie parallel zu diesem zweiten Seitenrand bereitgestellt sind. Das Abschieben der Anzahl der Stückgüter der zweiten Stückgutreihe mit dem zweiten Abschieber kann in dieser Anordnung besonders schonend erfolgen, da der Schiebeweg für jedes Stückgut der zweiten Stückgutreihe von der zweiten Zufuhrposition in die zweite Übergabeposition möglichst kurz ist. Überdies ist in dieser Anordnung vorteilhaft, dass die Abschiebung der zweiten Stückgutreihe mit dem zweiten Abschieber quer zur Längsrichtung der Stückgutreihe erfolgt. Insbesondere bei zwei oder mehreren Stückguteinheiten, die die zweite Stückgutreihe bilden, kann das Abschieben von der zweiten Zufuhrposition in die zweite Übergabeposition somit ohne gegenseitiges Weiterschieben einzelner Stückguteinheiten erfolgen, wodurch unerwünschte Beschädigungen des Stückguts vermieden werden können.

Es ist im Rahmen der Erfindung jedoch auch möglich, die zweite Zufuhrposition so zu wählen, dass die Stückgüter der betreffenden zweiten Stückgutreihe im rechten Winkel zum zweiten Seitenrand bzw. orthogonal zum zweiten Seitenrand bereitgestellt sind. Dies kann allerdings den Nachteil haben, dass insbesondere bei zwei oder mehreren Stückguteinheiten, die je nach individueller Stapelaufgabe eine solche zweite Stückgutreihe bilden können, beim gemeinsamen Abschieben mit einem zweiten Abschieber in Längsrichtung der zweiten Stückgutreihe die zwei oder mehreren Stückguteinheiten zumindest teilweise einander gegenseitig weiterschieben.

Ebenso kann der zweite Seitenrand, zu dem die zweite Zufuhrposition benachbart ist, in einem Winkel zum ersten Seitenrand, vorzugsweise orthogonal bzw. im rechten Winkel zum ersten Seitenrand, angeordnet sein. Die erste und die zweite Zufuhrposition befinden sich in diesem Fall also in einem Winkel, vorzugsweise in einem rechten Winkel, jeweils zueinander benachbart sowie benachbart zu zwei aneinandergrenzenden Seitenrändern entlang der Übergabefläche. Der zweite Seitenrand bildet einen direkt an den ersten Seitenrand anschließenden, nächsten Seitenrandabschnitt der Übergabefläche, der im Winkel, vorzugsweise orthogonal, an den ersten Seitenrand angrenzt.

Die Schiebevorrichtung umfasst bei einer erfindungsgemäßen Vorrichtung zumindest einen zweiten Abschieber. Der zumindest eine zweite Abschieber ist zum Schieben der zumindest einen zweiten Stückgutreihe von der zweiten Zufuhrposition in eine zweite Übergabeposition auf der Übergabefläche eingerichtet. Vorzugsweise ist jeder Stückgutreihe ein eigener Abschieber zugeordnet, um die betreffende Stückgutreihe - unabhängig von zumindest einer oder mehreren weiteren Stückgutreihen derselben Stückgutlage - von ihrer Zufuhrposition, die benachbart zu einem Seitenrand der Übergabefläche liegt, von dort aus in eine entsprechende Übergabeposition zu verschieben, die sich auf der Übergabefläche befindet.

Die Übergabefläche dient jeweils zur gemeinsamen Anordnung der Stückgüter der zumindest zwei oder mehreren Stückgutreihen, die eine gemeinsame Stückgutlage bilden. Sobald die Stückgüter einer Stückgutlage von der Übergabefläche auf eine Auflage, beispielsweise eine Transportpalette, die sich vorzugsweise unterhalb der Übergabefläche befindet, übergeben wurden, steht die entleerte Übergabefläche erneut zur Anordnung einer nächsten gemeinsamen Stückgutlage aus zwei oder mehreren Stückgutreihen bereit.

Definitionsgemäß kann im Weiteren der Begriff von "Stückgüter einer Stückgutreihe" - abhängig von den individuellen Anforderungen des jeweils zusammenzustellenden Stückgutes zu einer Stückgutlage - auch nur ein einziges Stückgut umfassen. Üblicherweise umfasst eine Stückgutreihe jedoch zwei oder mehrere Stückguteinheiten, die jeweils reihenförmig hintereinander bzw. nebeneinander angeordnet sind. Beim Zusammenstellen einer bestimmten Stückgutlage kann die erste Anzahl der Stückgüter der ersten Stückgutreihe dabei gleich oder unterschiedlich der zweiten Anzahl der Stückgüter der zweiten Stückgutreihe sein. Ebenso können Stückgüter weiterer Stückgutreihen, beispielsweise eine dritte Anzahl von Stückgütern einer dritten Stückgutreihe und/oder eine vierte Anzahl von Stückgütern einer vierten Stückgutreihe, gemeinsam mit den Stückgütern der ersten und der zweiten Stückgutreihe eine gemeinsame Stückgutlage bilden. Die Anzahl der Stückguteinheiten, die eine jeweilige Stückgutreihe bilden, ist nicht beschränkt und kann jeweils auch die Zahl eins sein. Somit können definitionsgemäß beispielsweise auch ein einziges Stückgut einer ersten Stückgutreihe und ein einziges Stückgut einer zweiten Stückgutreihe gemeinsam eine Stückgutlage aus gesamt zwei Stückgütern bilden.

Wie eingangs erwähnt ist die erfindungsgemäße Vorrichtung in einer bevorzugten Ausführung an sich zum Stapeln von zwei oder mehreren Lagen von Stückgut übereinander zu einem zwei- oder mehrlagigen Stückgutstapel geeignet. Selbstredend kann in dieser bevorzugten Ausführung mit der erfindungsgemäßen Vorrichtung ebenso ein Stückgutstapel mit nur einer einzigen Stückgutlage, die zumindest aus zwei Reihen von Stückgut gebildet ist, erstellt werden. Dies kann beispielsweise dann der Fall sein, wenn bei Chargenende einer Produktion nur mehr so wenige Stückguteinheiten zusammenzustellen sind, dass sich diese in einer einzigen Stückgutlage anordnen lassen. Abhängig von der jeweiligen Stapelaufgabe kann mit der erfindungsgemäßen Vorrichtung somit auch nur eine einzige Stückgutlage zusammengestellt werden, die dann anschließend gegebenenfalls auf eine Auflage, vorzugsweise eine Transportpalette, übergeben werden kann.

Der Einfachheit halber umfasst im Weiteren der verwendete Begriff "Stückgutstapel" auch diesen Sonderfall einer einzigen Stückgutlage. Die Anzahl der aufgestapelten Stückgutlagen, die einen Stückgutstapel bilden, ist somit nicht beschränkt und die Anzahl der aufgestapelten Stückgutlagen kann auch die Zahl eins sein.

Je nach Anzahl und Größe der Stückgüter, die zu einer Stückgutreihe einer Stückgutlage aneinandergereiht werden, kann eine solche Stückgutreihe einen jeweils individuellen Flächenbedarf aufweisen bzw. eine Fläche mit jeweils individueller Flächenausdehnung einnehmen. Die hier und im Weiteren der Einfachheit halber verwendeten Begriffe "Zufuhrposition" und "Übergabeposition" von Stückgütern einer Stückgutreihe bedeuten in diesem Zusammenhang folglich, dass die Anzahl der Stückgüter der betreffenden Stückgutreihe, die für das Zusammenstellen einer Stückgutlage ausgewählt sind, in ihrer "Zufuhrposition" und in ihrer "Übergabeposition" jeweils eine bestimmte Fläche einnehmen. In der "Zufuhrposition" befindet sich die Anzahl der Stückgüter der betreffenden Stückgutreihe noch auf der Zufuhrvorrichtung, beispielsweise auf einem Lageformband der Zufuhrvorrichtung, das benachbart ist zu einem Seitenrand der Übergabefläche. Die Stückgüter einer Stückgutreihe nehmen folglich in ihrer "Zufuhrposition" eine bestimmte Fläche auf der Zufuhrvorrichtung, beispielsweise auf einem Lageformband der Zufuhrvorrichtung, ein. In der "Übergabeposition" befinden sich die Anzahl der Stückgüter der entsprechenden Stückgutreihe, die für das Zusammenstellen einer Stückgutlage ausgewählt sind, bereits auf der Übergabefläche und nehmen dort eine bestimmte Teilfläche der Übergabefläche ein.

Außerdem umfasst definitionsgemäß der hier verwendete Begriff einer "Zufuhrvorrichtung" jeweils diejenigen an sich aus dem Stand der Technik bekannten Bauteile und Einrichtungen, die für die Zufuhr einer Stückgutreihe mit definierter Anordnung der einzelnen Stückguteinheiten erforderlich sein können. Es sind dies beispielhaft ein oder mehrere Zufuhrbänder, eine oder mehrere Rollenfördereinrichtungen, ein oder mehrere Taktbänder, eine oder mehrere Drehvorrichtungen, ein oder mehrere Lagenformbänder, und/oder ein oder mehrere Formbänder wie beispielsweise Pressbänder, die je nach Stapelaufgabe zur geeigneten Anordnung und Zufuhr einer Stückgutreihe mit einer Zufuhrvorrichtung erforderlich sein können.

Beispielsweise kann eine solche Drehvorrichtung dazu dienen, einzelne Stückguteinheiten wie einen einzelnen gefüllten Sack, in seiner Lage auf einem Zufuhrband oder einem Rollenförderer entsprechend zu drehen und/oder zu wenden. Damit können die mehreren Stückguteinheiten, die gemeinsam eine Stückgutreihe bilden, so ausgerichtet werden, dass sie beispielsweise jeweils gleich orientiert sind, wobei jeweils eine Verpackungsvorderseite jedes Stückguts der Stückgutreihe beispielhaft mit seiner Vorderseite nach oben orientiert zugeführt wird. Ebenso kann mit einer solchen Drehvorrichtung bedarfsweise jedes Stückgut einer Stückgutreihe so angeordnet werden, dass die Stückguteinheiten wahlweise entweder mit ihren Längsseiten oder mit ihren Breitseiten nebeneinander liegend auf der Zufuhrvorrichtung zugeführt werden. Die Orientierung der Stückguteinheiten einer Stückgutreihe hängt dabei vom entsprechend auszubildenden Lagebild einer bestimmten Stückgutlage des Stückgutstapels ab. Anschließend an die Drehvorrichtung können die einzelnen Stückgutreihen über entsprechende Zufuhrbänder, Lageformbänder und dergleichen an die jeweilige Zufuhrposition befördert werden. Jede der zumindest zwei Zufuhrvorrichtungen kann dabei je nach individueller Aufgabenstellung eine Auswahl der vorhin aufgezählten Bauteile oder Einheiten mit gleicher oder aber mit einer unterschiedlichen Anzahl der betreffenden Einheiten umfassen.

Ferner dienen die im Folgenden verwendeten Positionsangaben von Bauteilen oder Komponenten, wie beispielsweise die Begriffe "oben", "unten", "oberhalb", "unterhalb", "vorne", "hinten", "seitlich", "innerhalb", "außerhalb", "in axialer Richtung", "in radialer Richtung" und dergleichen, im Wesentlichen dem besseren Verständnis der Erfindung, insbesondere in Verbindung mit den nachfolgenden Zeichnungen. Die verwendeten Positionsangaben können sich möglicherweise auf bestimmte Positionen von einzelnen Stückguteinheiten oder Stückgutreihen im Betrieb einer erfindungsgemäßen Vorrichtung oder auf einzelnen Ansichten in den Figuren beziehen. In jedem Fall sind solche Positionsangaben dem Fachmann geläufig, schränken die vorliegende Erfindung aber nicht ein.

Aufgrund der von der ersten Zufuhrvorrichtung unabhängigen Zufuhr einer Anzahl von Stückgütern einer weiteren, zweiten Stückgutreihe mit einer zweiten Zufuhrvorrichtung an eine zweite Zufuhrposition, wobei die zweite Zufuhrposition ebenso unabhängig von der ersten Zufuhrposition der mit der ersten Zufuhrvorrichtung herangeführten ersten Stückgutreihe ist, können vorteilhaft sowohl die Flexibilität, als auch die Stapelleistung der Vorrichtung erhöht werden. Auf diese Weise können besonders flexibel auch unterschiedlich beschaffene Stückgüter zu einer gemeinsamen Stückgutlage arrangiert werden.

So können beispielhaft als erste Stückgutreihe kleinere Stückguteinheiten mit einer kleineren Auflagefläche je Stückgut, beispielsweise kleinere befüllte Säcke, mit der ersten Zufuhrvorrichtung an eine erste Zufuhrposition herangeführt werden, wobei die erste Zufuhrposition benachbart ist zu einem ersten Seitenrand der Übergabefläche. Unabhängig davon können beispielsweise vergleichsweise größere Stückguteinheiten mit einer relativ größeren Auflagefläche, beispielhaft in Form von größeren befüllten Säcken, als zweite Stückgutreihe mit der zweiten Zufuhrvorrichtung an eine zweite Zufuhrposition, die benachbart ist zu einem vom ersten Seitenrand unterschiedlichen, zweiten Seitenrand der Übergabefläche, herangeführt werden. Auf der Übergabefläche der Übergabevorrichtung werden die Stückgüter dieser beiden Stückgutreihen dann entsprechend zu einer gemeinsamen Stückgutlage angeordnet.

Die Erfindung ist nicht auf den Einsatz einer zusätzlichen zweiten Zufuhrvorrichtung für die Zufuhr von Stückgütern mindestens einer weiteren zweiten Stückgutreihe beschränkt. Mit der zweiten Zufuhrvorrichtung können gegebenenfalls auch Stückgüter von zwei zweiten Stückgutreihen parallel zueinander an eine zweite Zufuhrposition herangeführt werden, welche zweite Zufuhrposition benachbart ist zu einem vom ersten Seitenrand unterschiedlichen Seitenrand. Ebenso kann im Rahmen der Erfindung zusätzlich zur zweiten Zufuhrvorrichtung auch eine dritte Zufuhrvorrichtung vorgesehen sein, welche dritte Zufuhrvorrichtung für die Zufuhr von Stückgütern einer dritten Stückgutreihe an eine dritte Zufuhrposition vorgesehen sein kann. Die dritte Zufuhrposition kann benachbart zu einem zum ersten Seitenrand unterschiedlichen dritten Seitenrand der Übergabefläche sein. Dieser dritte Seitenrand kann außerdem an einer vom zweiten Seitenrand unterschiedlichen Position liegen und einen weiteren Seitenrandabschnitt der Übergabefläche bilden. Die Schiebevorrichtung umfasst in diesem Fall einen dritten Abschieber zum Schieben von Stückgütern der dritten Stückgutreihe von einer dritten Zufuhrposition in eine dritte Übergabeposition auf der Übergabefläche. Die dritte Übergabeposition befindet sich dabei benachbart zur ersten und zur zweiten Übergabeposition ebenfalls auf der Übergabefläche.

In dieser Ausführungsvariante der Erfindung können somit rasch und effizient von drei Zufuhrvorrichtungen unabhängig voneinander sowie gegebenenfalls im Wesentlichen gleichzeitig zumindest drei Stückgutreihen an drei Seitenränder der Übergabefläche der Übergabevorrichtung herangeführt werden. Vorteilhaft kann in dieser weiteren Ausführung sowohl die Flexibilität, als auch die Stapelleistung der Vorrichtung weiter erhöht werden. Insbesondere können auf diese Weise besonders flexibel auch unterschiedlich beschaffene Stückgüter zu einer gemeinsamen Stückgutlage arrangiert werden.

Der Einsatz zumindest eines Abschiebers je Zufuhrvorrichtung oder, in anderen Worten, Der Einsatz zumindest eines Abschiebers je Stückgutreihe, bietet den Vorteil, dass das Abschieben der Stückgüter der einzelnen Stückgutreihen von der jeweiligen Zufuhrposition am Rand der Übergabefläche in eine Übergabeposition auf der Übergabefläche unter Zuhilfenahme jeweils eines individuellen Abschiebers schonender erfolgen kann als dies beim gemeinsamen Verschieben einer gesamten Stückgutlage aus Stückgütern von zumindest zwei Stückgutreihen von einer Schiebefläche auf eine entsprechende Übergabefläche der Fall ist.

In einer weiteren vorteilhaften Ausführung der erfindungsgemäßen Vorrichtung kann die zweite Zufuhrposition benachbart zu einem dem ersten Seitenrand gegenüberliegenden zweiten Seitenrand der Übergabefläche sein. Gemäß dieser Anordnung werden die Stückgüter der zumindest einen zweiten Stückgutreihe mit einer zweiten Zufuhrposition an die der ersten Zufuhrposition gegenüberliegenden Seite der Übergabefläche herangeführt.

Das Abschieben der Stückgüter der zumindest einen zweiten Stückgutreihe von der zweiten Zufuhrposition in eine zweite Übergabeposition kann mit dem zumindest einen zweiten Abschieber ebenfalls benachbart zum zweiten Seitenrand aus und damit gegenüberliegend zum ersten Abschieber erfolgen. Vorteilhaft behindern sich in dieser Ausführung weder die an gegenüberliegenden Seiten der Übergabefläche angeordneten Zufuhrvorrichtungen, noch die einander gegenüberliegenden Abschieber der Schiebevorrichtung. Die Betriebsweisen der ersten und der zumindest einen zweiten Zufuhrvorrichtung sowie des ersten und des zumindest einen zweiten Abschiebers können daher besonders flexibel sowie voneinander unabhängig erfolgen. Das Verschieben der Stückgüter der ersten Stückgutreihe aus der ersten Zufuhrposition in die erste Übergabeposition kann ebenfalls unabhängig vom Verschieben der Stückgüter der zweiten Stückgutreihe aus der zweiten Zufuhrposition in die zweite Übergabeposition erfolgen, da die Stückgüter der ersten Stückgutreihe und die Stückgüter der zweiten Stückgutreihe von einander gegenüberliegenden Seiten auf die Übergabefläche verschoben werden. Zweckmäßigerweise sind die beiden Übergabepositionen, auf die die Stückgüter der ersten Stückgutreihe und die der zweiten Stückgutreihe von gegenüberliegenden Seitenrändern der Übergabefläche aus geschoben werden, so angeordnet, dass die beiden Übergabeflächen zueinander benachbart sowie möglichst knapp nebeneinander auf der Übergabefläche angeordnet sind, sich dabei aber gegenseitig nicht behindern.

Besonders zweckmäßig kann es sein, wenn bei einer Vorrichtung gemäß der Erfindung die erste Zufuhrvorrichtung dazu eingerichtet ist, in der ersten Zufuhrposition eine Anzahl von Stückgütern der ersten Stückgutreihe in Längsrichtung entlang des ersten Seitenrands der Übergabefläche verteilt auszurichten, sowie die zumindest eine zweite Zufuhrvorrichtung dazu eingerichtet ist, in der zweiten Zufuhrposition eine Anzahl von Stückgütern der zumindest einen zweiten Stückgutreihe in Längsrichtung entlang des zweiten Seitenrands der Übergabefläche verteilt auszurichten.

In dieser bevorzugten Ausführung der Erfindung können die Anzahl von Stückgütern jeder Stückgutreihe von einem eigenen Abschieber aus einer Zufuhrposition jeweils quer zur Längsrichtung der betreffenden Stückgutreihe in eine Übergabeposition geschoben werden. Der Schiebeweg der Stückgüter der jeweiligen Stückgutreihe von der Zufuhrposition in die jeweilige Übergabeposition verläuft hier jeweils quer zum ersten bzw. zweiten Seitenrand. Vorteilhaft ist dabei, dass jedes einzelne Stückgut bzw. jede einzelne Stückguteinheit dabei direkt für sich geschoben wird, und somit eine indirekte Verschiebung, wobei Stückgut auf Stückgut aufliegend gegenseitig weiter verschoben wird, vermieden werden kann. Somit kann eine unerwünschte Belastung der Stückgutverpackung, die zur Deformation, zur Beschädigung, oder zum Aufwölben von Stückgut aufgrund von Unterschieben von Stückgut führen kann, zuverlässig vermieden werden. Die Stückgüter der einzelnen Stückgutreihen können somit sauber und exakt zu Stückgutlagen angeordnet werden, bei denen die Stückgüter möglichst fugenlos nebeneinander gelegt sind. In weiterer Folge wird damit vorteilshaft auch die eingangs genannte Palettierqualität insgesamt weiter erhöht, da die einzelnen Stückgutlagen jeweils ein möglichst exaktes Lagenbild aufweisen und damit stabil übereinander gestapelt werden können.

Besonders flexibel ist eine erfindungsgemäße Vorrichtung, da eine erste Schubrichtung des ersten Abschiebers zum Schieben einer Anzahl von Stückgütern der ersten Stückgutreihe von der ersten Zufuhrposition in die erste Übergabeposition auf der Übergabefläche entgegengesetzt orientiert ist zu einer zweiten Schubrichtung des zumindest einen zweiten Abschiebers zum Schieben einer Anzahl von Stückgütern der zumindest einen zweiten Stückgutreihe von der zweiten Zufuhrposition in die zweite Übergabeposition auf der Übergabefläche.

Von dieser erfindungsgemäßen Anordnung sind Ausführungen umfasst, bei denen eine zweite Zufuhrposition einer Anzahl von Stückgütern einer zweiten Stückgutreihe an einem zweiten Seitenrand der Übergabefläche angeordnet ist, der dem ersten Seitenrand und der zu diesem ersten Seitenrand benachbarten ersten Übergabeposition entgegengesetzt an der gegenüberliegenden Seite der Übergabefläche angeordnet ist.

Das Verschieben der Anzahl von Stückgütern einer Stückgutreihe kann damit von der jeweiligen Zufuhrposition, die benachbart zu einem Seitenrand der Übergabefläche ist, in die jeweilige Übergabefläche auf der Übergabefläche grundsätzlich von zwei unterschiedlichen Seiten aus auf die Übergabefläche erfolgen.

Überdies kann es zweckmäßig sein, wenn bei einer Vorrichtung gemäß der Erfindung die erste Übergabeposition sowie die zweite Übergabeposition auf der Übergabefläche zwischen der ersten Zufuhrposition und der zweiten Zufuhrposition positioniert sind. Gemäß dieser bevorzugten Ausführung erfolgt das Verschieben von Stückgütern der ersten Stückgutreihe von der ersten Zufuhrposition aus in eine erste Übergabeposition von einem ersten Seitenrand bzw. von einer ersten Seite der Übergabefläche aus. Das Verschieben von Stückgütern der zweiten Stückgutreihe von der zweiten Zufuhrposition aus in eine zweite Übergabeposition erfolgt von einem zweiten Seitenrand bzw. von einer zweiten Seite der Übergabefläche aus, wobei die zweite Seite der ersten Seite gegenüberliegt. Die jeweils zwischen der ersten Zufuhrposition und der zweiten Zufuhrposition angeordnete erste Übergabeposition und zweite Übergabeposition befinden sich jeweils auf der Übergabefläche. Aufgrund des gegengleichen Verschiebens der Stückgutreihen von zwei einander gegenüberliegenden Seiten der Übergabefläche wird die Flexibilität und Geschwindigkeit der Übergabe erhöht, da sich die Stückgüter der beiden Stückgutreihen bei der Bereitstellung und Zuführung auf die Übergabefläche gegenseitig nicht behindern.

Besonders vorteilhaft kann sein, wenn bei einer Vorrichtung gemäß der Erfindung ein erster Schiebeweg einer Anzahl von Stückgütern der ersten Stückgutreihe von der ersten Zufuhrposition in die erste Übergabeposition unabhängig ist von einem zweiten Schiebeweg betreffend eine Anzahl von Stückgüter der zumindest einen zweiten Stückgutreihe von der zweiten Zufuhrposition in die zweite Übergabeposition.

Dies ist insbesondere dann der Fall, wenn die Bereitstellung und Zuführung von Stückgütern der zweiten Stückgutreihe von einer gegenüberliegenden Seite in Bezug zur ersten Seite der Übergabefläche, von der aus die Bereitstellung und Zuführung der Stückgüter der ersten Stückgutreihe aus erfolgt. Oder in anderen Worten ist dies insbesondere dann der Fall, wenn bei der Vorrichtung ein erster Schiebeweg von Stückgütern der ersten Stückgutreihe von der ersten Zufuhrposition in eine erste Übergabeposition entgegengesetzt orientiert ist zu einem zweiten Schiebeweg von Stückgütern der zweiten Stückgutreihe von der zweiten Zufuhrposition in eine zweite Übergabeposition.

Zweckmäßig kann überdies sein, wenn bei einer Vorrichtung die erste Übergabeposition eine erste Teilfläche der Übergabefläche sowie die zweite Übergabeposition eine zweite Teilfläche der Übergabefläche einnimmt, wobei vorzugsweise die erste Teilfläche benachbart ist zur zweiten Teilfläche. Wie weiter vorne bereits erwähnt, kann durch geeignete benachbarte Positionierung der Übergabepositionen zueinander einerseits vermieden werden, dass die von den Stückgütern der ersten Stückgutreihe in der ersten Übergabeposition eingenommene erste Teilfläche und die von den Stückgütern der zweiten Stückgutreihe in der ersten Übergabeposition eingenommene zweite Teilfläche derart knapp aneinander grenzen, dass sich beim Aufschieben auf die Übergabefläche die beiden Stückgutreihen gegenseitig behindern. Andererseits kann vermieden werden, dass die beiden Teilflächen, die von den Stückgütern der Stückgutreihen in ihren Übergabepositionen eingenommen werden, zu weit auseinander liegen und es somit zu unerwünschten Spalten und Abständen zwischen den beiden auf der Übergabefläche angeordneten Stückgutreihen kommt. Zweckmäßiger Weise kann daher im laufenden Betrieb der Vorrichtung je nach zu stapelndem Stückgut ein möglichst geringer Abstand zwischen den Übergabepositionen bzw. den dabei eingenommenen Teilflächen gewählt werden, wobei der Abstand zu gewählt wird, das ein behinderungsfreies Verschieben der Stückgüter der Stückgutreihen ermöglicht wird.

Besonders zweckmäßig kann bei einer Vorrichtung gemäß der Erfindung eine erste Teilfläche der Übergabefläche, welche die erste Übergabeposition umfasst, sowie eine zweite Teilfläche der Übergabefläche, welche die zweite Übergabeposition umfasst, eine verschließbare Entladeöffnung ausbilden, wobei die verschließbare Entladeöffnung vorzugsweise als zumindest eine zwischen einer geschlossenen und einer geöffneten Position verfahrbare Entladeplatte ausgebildet ist. Durch Öffnen der verschließbaren Entladeöffnung können die auf der Übergabefläche befindlichen Stückgüter einer Stückgutlage beispielsweise an eine unterhalb der Übergabefläche befindliche Auflage wie eine Transportpalette oder einen bereits in Bildung befindlichen Stückgutstapel übergeben werden. Im Falle eines zwei- oder mehrlagigen Stückgutstapels kann diese übergebene Stückgutlage auch auf eine bereits zuvor übergebene Stückgutlage aufgestapelt werden und eine beliebige Lage innerhalb des Stückgutstapels bilden. Ebenso kann je nach Stapelaufgabe die übergebene Stückgutlage eine einzige Stückgutlage auf der Transportpalette oder der vergleichbaren Auflage bilden, wobei in einem solchen Fall der Palettenstapel nur eine einzige Stückgutlage umfasst.

Je nach Beschaffenheit des zu stapelnden Stückguts können gegebenenfalls auch noch Stückgüter einer oder mehrerer weiterer Stückgutreihen, also gegebenenfalls in Form einer dritten und/oder einer vierten Stückgutreihe, gemeinsam mit der ersten und der zweiten Stückgutreihe mit ihren jeweils individuellen Übergabepositionen im Bereich der Entladeöffnung innerhalb der Übergabefläche angeordnet werden. Beim Öffnen der Entladeöffnung können in diesem Fall gegebenenfalls Stückgüter von insgesamt drei oder mehr als drei nebeneinander angeordnete Stückgutreihen, die gemeinsam eine Stückgutlage bilden, gemeinsam an eine darunter befindliche Palette oder entsprechende Auflage übergeben werden.

Den Gestaltungsmöglichkeiten, wie denn eine verschließbare Entladeöffnung apparativ ausgeführt sein kann, sind kaum Grenzen gesetzt. Um ein möglichst schonendes Übergeben der auf der Übergabefläche vorbereiteten Stückgutlage an eine vorzugsweise unterhalb der Übergabefläche positionierte Transportpalette oder Auflage zu ermöglichen, ist die verschließbare Entladeöffnung vorzugsweise als zumindest eine zwischen einer geschlossenen und einer geöffneten Position verfahrbare Entladeplatte ausgebildet. In dieser bevorzugten Ausführung verfährt die zumindest eine Entladeplatte in seitlicher, vorzugsweise waagrechter, Richtung, um die Entladeöffnung frei zu geben und die Übergabe der Stückgüter der Stückgutlage an eine unterhalb befindliche, frühere Stückgutlage und/oder die Transportpalette bzw. eine entsprechende Auflage zu gewährleisten. Je nach Größe und Anzahl der Stückgüter, die gemeinsam eine Stückgutlage bilden, kann die Entladeplatte beispielsweise zweistückig oder mehrstückig geteilt ausgeführt sein, wobei einzelne Entladeplatten jeweils Segmente zum Verschließen der Entladeöffnung bilden. Zweckmäßigerweise können bei einer Entladeöffnung, die mit zwei Entladeplatten verschlossen werden kann, die beiden Entladeplatten beispielsweise an gegenüberliegenden Seiten der Entladeöffnung positioniert sein und sich in zueinander entgegengesetzte Richtungen verfahren lassen.

Besonders schonend kann von einer erfindungsgemäßen Vorrichtung das in Stückgutreihen zugeführte Stückgut entsprechend zu einer Stückgutlage auf der Übergabefläche angeordnet werden, wenn der erste Abschieber während des Schiebens einer Anzahl von Stückgütern der ersten Stückgutreihe entlang eines ersten Schiebewegs von der ersten Zufuhrposition in die erste Übergabeposition jedes zu verschiebende Stückgut der ersten Stückgutreihe zumindest abschnittsweise berührt und/oder der zumindest eine zweite Abschieber während des Schiebens einer Anzahl von Stückgütern der zumindest einen zweiten Stückgutreihe entlang eines zweiten Schiebewegs von der zweiten Zufuhrposition in die zweite Übergabeposition jedes zu verschiebende Stückgut der zweiten Stückgutreihe zumindest abschnittsweise berührt.

Wie zuvor bereits erwähnt erfolgt das Abschieben der Stückgüter der Stückgutreihen dann besonders schonend, wenn der Schiebeweg des jeweiligen Abschiebers je Stückgutreihe jeweils quer zur Längsrichtung der betreffenden Stückgutreihe erfolgt. Dabei wird jede einzelne Stückguteinheit der betreffenden Stückgutreihe während des Abschiebevorgangs vom jeweiligen Abschieber zumindest abschnittsweise, beispielsweise entlang einer seiner Schmalseiten, berührt. Ein nachteiliges gegenseitiges Weiterschieben von Stückgut auf Stückgut und damit möglicherweise einhergehende Beschädigungen einzelner Stückgutverpackungen werden zuverlässig vermieden.

Erfindungsgemäß umfasst bei einer Vorrichtung die Schiebevorrichtung weiters einen ersten Ausrichtschieber sowie einen zweiten Ausrichtschieber zum seitlichen Ausrichten der auf der Übergabefläche aufgelegten Stückgüter, wobei der erste Ausrichtschieber entlang eines dritten Seitenrands der Übergabefläche und der zweite Ausrichtschieber entlang eines dem dritten Seitenrand gegenüberliegenden vierten Seitenrands der Übergabefläche angeordnet sind, und wobei die beiden Ausrichtschieber in zueinander entgegengesetzten Richtungen verfahrbar sind.

Unter Zuhilfenahme dieser Ausrichtschieber kann das aufgelegte Stückgut besonders formstabil und möglichst fugenlos auf der Übergabefläche ausgerichtet werden. Besonders vorteilhaft kann es sein, wenn der erste und der zweite Ausrichtschieber jeweils zwischen dem ersten und dem zweiten Abschieber angeordnet sind, sodass bei einer quadratischen oder rechteckförmigen Übergabefläche entlang jedes der vier Seitenränder alternierend entweder ein Abschieber oder ein Ausrichtschieber angeordnet sind. Die Stückguteinheiten bzw. Stückgutreihen, die gemeinsam eine Stückgutlage bilden, können in dieser Ausführung von jedem der vier Seitenränder der Übergabefläche aus verschoben und ausgerichtet werden.

Um eine besonders kompakte Bauweise zu ermöglichen, kann eine erfindungsgemäße Vorrichtung weiterhin eine Fördervorrichtung mit einer Verteilvorrichtung umfassen, wobei die Verteilvorrichtung dazu eingerichtet ist, Stückgüter in Stückgüter einer ersten Stückgutreihe, die der ersten Zufuhrvorrichtung aufgegeben wird, und in Stückgüter zumindest einer zweiten Stückgutreihe, die der zumindest einen zweiten Zufuhrvorrichtung aufgegeben wird, aufzuteilen. Vorteilhaft kann somit die Zufuhr von Stückguteinheiten beispielsweise aus einer Produktion oder Verpackung kommend auch über weitere Förderstrecken mittels einer gemeinsamen, zentralen Fördervorrichtung erfolgen, wobei gegebenenfalls erst kurz vor der Vorrichtung mittels der Verteilvorrichtung die Stückguteinheiten entsprechend aufgeteilt und in Stückgüter jeweils einer individuellen Stückgutreihe der jeweiligen individuellen Zufuhrvorrichtung aufgegeben werden. Die zwei oder mehreren Zufuhrvorrichtungen zum entsprechenden Beschicken der Vorrichtung können vergleichsweise kompakt und kostengünstig gestaltet sein.

Um mit einer erfindungsgemäßen Vorrichtung besonders effektiv Stückgutstapel mit mehreren Stückgutlagen herstellen zu können, kann die Vorrichtung vorteilhaft eine Hubvorrichtung umfassen, wobei die Hubvorrichtung unterhalb der Übergabefläche angeordnet und dazu eingerichtet ist, bei geöffneter Entladeöffnung eine auf der Übergabefläche fertig gebildete Stückgutlage als eine Stückgutlage eines Stückgutstapels aufzunehmen. Mittels einer Hubvorrichtung kann beispielsweise ein in Bildung befindlicher Stückgutstapel in an sich bekannter Weise möglichst nahe von unten kommend an die Unterseite des Übergabetisches bzw. an die Unterseite der Übergabefläche herangeführt zu werden. Eine fertig gebildete Stückgutlage, die auf der Oberseite der Übergabefläche entsprechend angeordnet ist, kann bei geöffneter Entladeöffnung sodann als weitere Stückgutlage dem darunter befindlichen Stückgutstapel übergeben werden. Die Hubvorrichtung kann dabei beispielsweise eine translatorische Hubbewegung ausführen, um die jeweils auf der Übergabefläche zusammengestellte Stückgutlage beim Öffnen der Entladeöffnung direkt unterhalb des Übergabetisches aufzunehmen. Dies hat den Vorteil einer geringen Fallhöhe der Stückgüter während der Übergabe sowie einer Transportmöglichkeit in translatorischer Bewegungsrichtung in Höhenrichtung des gesamten Stückgutstapels. Je nach Aufgabenstellung kann der Stückgutstapel mit und ohne Transportpalette ausgeführt sein.

Die eingangs genannten Aufgaben werden außerdem von einem neuartigen Verfahren zum Zusammenstellen von Stückgutlagen mittels Stückgüter aus wenigstens zwei Reihen von Stückgütern auf einer Übergabefläche gelöst, wobei das Verfahren die folgenden Schritte umfasst:
- Zuführen einer Anzahl von Stückgütern einer ersten Stückgutreihe an eine erste Zufuhrposition, wobei die erste Zufuhrposition benachbart ist zu einem ersten Seitenrand der Übergabefläche;
- Zuführen einer Anzahl von Stückgütern zumindest einer zweiten Stückgutreihe an eine zweite Zufuhrposition, wobei die zweite Zufuhrposition benachbart ist zu einem zweiten Seitenrand der Übergabefläche, wobei der zweite Seitenrand unterschiedlich ist zum ersten Seitenrand der Übergabefläche;
- Verschieben der Anzahl von Stückgütern der ersten Stückgutreihe mit einem ersten Abschieber entlang eines ersten Schiebewegs von der ersten Zufuhrposition in eine erste Übergabeposition auf der Übergabefläche;
- Verschieben der Anzahl von Stückgütern der zumindest einen zweiten Stückgutreihe mit zumindest einem zweiten Abschieber entlang eines zweiten Schiebewegs von der zweiten Zufuhrposition in eine zweite Übergabeposition auf der Übergabefläche, wobei die zweite Übergabeposition der ersten Übergabeposition benachbart ist; wobei
- zum Formen der auf der Übergabefläche aufgelegten Stückgüter zu einer Stückgutlage zwei einander gegenüberliegende Ausrichtschieber betätigt werden.

Die zuvor genannten Vorteile und vorteilhaften Wirkungen einer erfindungsgemäßen Vorrichtung gelten sinngemäß gleichermaßen auch für das neuartige Verfahren zum Zusammenstellen von Stückgutlagen.

In einer besonders bevorzugten Verfahrensvariante kann die zweite Zufuhrposition benachbart zu einem zweiten Seitenrand der Übergabefläche sein, wobei der zweite Seitenrand dem ersten Seitenrand gegenüberliegt. Wie zuvor bereits anhand der erfindungsgemäßen Vorrichtung dargelegt kann beim gegengleichen Verschieben von Stückgütern der Stückgutreihen von zwei einander gegenüberliegenden Seiten der Übergabefläche aus die Flexibilität und Geschwindigkeit der Übergabe erhöht werden, da sich die Stückgüter der beiden Stückgutreihen bei der Bereitstellung und Zuführung auf die Übergabefläche gegenseitig nicht behindern.

Besonders effizient kann ein erfindungsgemäßes Palettier-Verfahren geführt werden, bei dem das Zuführen von Stückgütern der ersten Stückgutreihe an eine erste Zufuhrposition sowie das Zuführen von Stückgütern der zumindest einen zweiten Stückgutreihe an eine zweite Zufuhrposition unabhängig voneinander erfolgen. Die Aufteilung des Stückgutes kann dabei vorzugsweise alternierend zwischen den beiden Zufuhrpositionen erfolgen. An sich wird zwar eine möglichst gleichzeitige Zuführung der ersten und zweiten Stückgutreihe angestrebt, dies hängt jedoch von unterschiedlichen Faktoren ab wie beispielsweise der vom jeweiligen Stückgutlagenbild vorgegebenen, gegebenenfalls unterschiedlichen Stückgutanzahl je Stückgutreihe.

Die Stapelleistung kann mit einem erfindungsgemäßen Verfahren vorteilhaft erhöht werden, wenn das Verschieben der Stückgüter der ersten Stückgutreihe mit dem ersten Abschieber sowie das Verschieben der Stückgüter der zumindest einen zweiten Stückgutreihe mit dem zumindest einen zweiten Abschieber in zueinander entgegengesetzter Richtung erfolgen. Nach Bildung und Positionierung von Stückgütern einer Stückgutreihe an einer entsprechenden Zufuhrposition sollte der Abschub, bei freier Übergabeposition, der betreffenden Stückgutreihe möglichst sofort erfolgen, um die entsprechende Zufuhrposition wiederum für die Stückgüter der nachfolgenden Stückgutreihe zu entleeren. An sich wird wiederum ein möglichst gleichzeitiges Verschieben des ersten und des zumindest einen zweiten Abschiebers angestrebt, um möglichst effizient und rasch eine gemeinsame Stückgutlage auf der Übergabefläche anordnen zu können. Allerdings wird es meist auch hier zu einem kleinen zeitlichen Versatz zwischen den zumindest zwei oder mehreren Abschiebern kommen. Jedenfalls müssen die zumindest zwei Abschieber bis zum Ende der jeweiligen Stückgutlagenbildung in ihrer vorderen Übergabeposition verweilen, um die Stückgüter der jeweiligen Stückgutreihe in deren Übergabepositionen auf der Übergabefläche zu fixieren.

Erfindungsgemäß können besonders formstabile Stückgutstapel erhalten werden, da bei einem erfindungsgemäßen Palettier-Verfahren ein Formen des in der ersten Übergabeposition sowie in der zweiten Übergabeposition befindlichen Stückguts zu einer Stückgutlage erfolgt. Zum Formen der auf der Übergabefläche aufgelegten Stückgüter zu einer Stückgutlage werden erfindungsgemäß zwei einander gegenüberliegende Ausrichtschieber betätigt. Erfindungsgemäß können zur Stückgutlagenbildung die Stückgüter der zumindest zwei Stückgutreihen in deren jeweiligen Übergabepositionen auf der Übergabefläche sowohl von den Abschiebern, als auch von den Ausrichtschiebern positioniert und fixiert werden. Damit wird eine besonders exakte Ausrichtung der Stückguteinheiten zueinander ermöglicht.

In einer Weiterbildung des Verfahrens kann nach dem Verschieben von Stückgütern auf die Übergabefläche und gegebenenfalls nach einem Formen der auf der Übergabefläche aufgelegten Stückgüter zu einer Stückgutlage eine verschließbare Entladeöffnung in der Übergabefläche geöffnet werden, wobei die Stückgutlage auf eine unterhalb der Übergabefläche befindliche Auflage, vorzugsweise eine Transportpalette, oder auf einen Stückgutstapel übergeben wird.

Vorzugsweise kann eine Transportpalette als Auflage für die übergebene Stückgutlage dienen. Oder die soeben zusammengestellte Stückgutlage wird einem in Bildung befindlichen Stückgutstapel übergeben, auf dem sich beispielsweise bereits zwei oder mehr aufeinander gestapelte Stückgutlagen befinden. Es ist jedoch auch denkbar, andere Auflagen zur Übergabe zumindest einer Stückgutlage zu verwenden oder auch palettenlose Stückgutstapel - ohne Transportpalette - herzustellen.

### KURZE BESCHREIBUNG DER FIGUREN

Die Erfindung wird nun anhand von Ausführungsbeispielen näher erläutert. Die schematischen Zeichnungen sind beispielhaft und sollen den Erfindungsgedanken zwar darlegen, diesen aber keinesfalls einengen oder gar abschließend wiedergeben. Es zeigen:
- **Fig. 1**: in einer isometrischen Ansicht schräg von vorne eine erfindungsgemäße Vorrichtung im Betrieb;
- **Fig. 2**: in einer Ansicht von oben die in Fig. 1 veranschaulichte Vorrichtung;
- **Fig. 3**: in einer isometrischen Ansicht schräg von vorne ein Detail einer Fördervorrichtung mit einer Verteilvorrichtung in einer ersten, oberen Position;
- **Fig. 4**: in einer isometrischen Ansicht schräg von vorne ein Detail einer Fördervorrichtung mit einer Verteilvorrichtung in einer zweiten, unteren Position;
- **Fig. 5**: in einer isometrischen Ansicht schräg von vorne ein Detail der erfindungsgemäßen Vorrichtung mit einer Übergabevorrichtung sowie mit einer Schiebevorrichtung jeweils in Ausgangslage ohne Stückgüter vor der Bildung einer neuen Stückgutlage, wobei sich die beiden Abschieber in einer hinteren Zufuhrposition befinden;
- **Fig. 6**: in einer Draufsicht die in Fig. 5 veranschaulichten Detailansicht, wobei sich die beiden Abschieber in einer vorderen Übergabeposition befinden;
- **Fig. 7**: in einer isometrischen Ansicht schräg von vorne ein Detail der Vorrichtung mit einer Übergabevorrichtung sowie mit zwei Stückgutreihen jeweils in Zufuhrposition zur Bildung einer ersten Stückgutlage, wobei die Schiebevorrichtung der Übersicht wegen hier ohne Abschieber gezeigt ist;
- **Fig. 8**: in einer Draufsicht die in Fig. 7 veranschaulichte Detailansicht;
- **Fig. 9**: in einer isometrischen Ansicht schräg von vorne ein Detail der Vorrichtung mit einer Schiebevorrichtung, wobei die zwei Stückgutreihen jeweils bereits in Übergabeposition zu einer ersten Stückgutlage auf die Übergabefläche geschoben sind;
- **Fig. 10**: in einer Ansicht von oben die in Fig. 9 veranschaulichte Anordnung;
- **Fig. 11**: in einer isometrischen Ansicht schräg von vorne ein Detail der Vorrichtung, wobei eine Entladeöffnung in der Übergabefläche geöffnet ist und die erste Stückgutlage bereits auf einen unterhalb befindlichen Stückgutstapel übergeben ist;
- **Fig. 12**: in einer Ansicht von oben die in Fig. 11 gezeigte Anordnung;
- **Fig. 13**: in einer Draufsicht von oben die Vorrichtung mit zwei Stückgutreihen jeweils in Zufuhrposition für eine weitere, zweite Stückgutlage, wobei die Schiebevorrichtung der Übersicht wegen hier ohne Abschieber gezeigt ist;
- **Fig. 14**: in einer Draufsicht von oben die Vorrichtung, wobei die zwei Stückgutreihen jeweils bereits in Übergabeposition zu einer zweiten Stückgutlage auf die Übergabefläche geschoben sind;
- **Fig. 15**: in einer isometrischen Ansicht schräg von vorne ein Detail der Vorrichtung samt einem mit mehreren Stückgutlagen belegten, fertig gestapelten Stückgutstapel.

### WEGE ZUR AUSFÜHRUNG DER ERFINDUNG

Im Folgenden werden in den unterschiedlichen Abbildungen gleiche Bauteile mit gleichen Funktionsweisen jeweils mit demselben Bezugszeichen bezeichnet. Die folgenden schematischen Abbildungen dienen gleichermaßen zur Beschreibung der erfindungsgemäßen Vorrichtung oder deren Bauteilen sowie zur Beschreibung des erfindungsgemäßen Verfahrens.

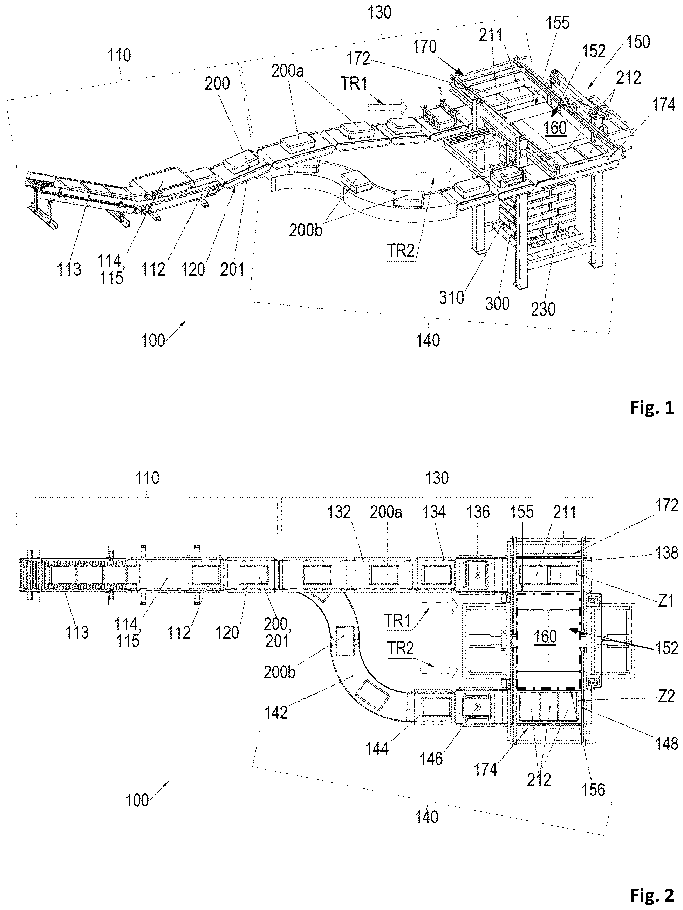

**Fig. 1** zeigt eine erfindungsgemäße Vorrichtung 100 zum Zusammenstellen von Stückgutlagen mit einer Fördervorrichtung 110, die hier beispielsweise ein Förderband 112, eine Rollenfördereinrichtung 113 sowie ein Formband 114 umfasst.

**Fig. 2** zeigt in einer Draufsicht die in Fig. 1 veranschaulichte erfindungsgemäße Vorrichtung 100 für das Zusammenstellen von Stückgutlagen. Die weitere Figurenbeschreibung bezieht sich daher gleichermaßen auf die Figuren 1 und 2. Das Formband 114 ist hier als Pressband 115 ausgebildet und dient dazu, die von der Fördervorrichtung 110 heran transportierten Stückgüter 200, die hier beispielsweise mit pulverförmigem Füllmaterial befüllte Säcke 201 sind, in eine liegende flache Form mit möglichst einheitlicher Sackhöhe zu pressen. Dazu befindet sich das Pressband 115 in einer gegebenenfalls variabel einstellbaren, definierten Höhe in paralleler Lage oberhalb des darunter befindlichen Förderbands 112.

Die Fördervorrichtung 110 umfasst hier weiters eine Verteilvorrichtung 120, die von einem schwenkbaren Verteilerband 121 gebildet ist.

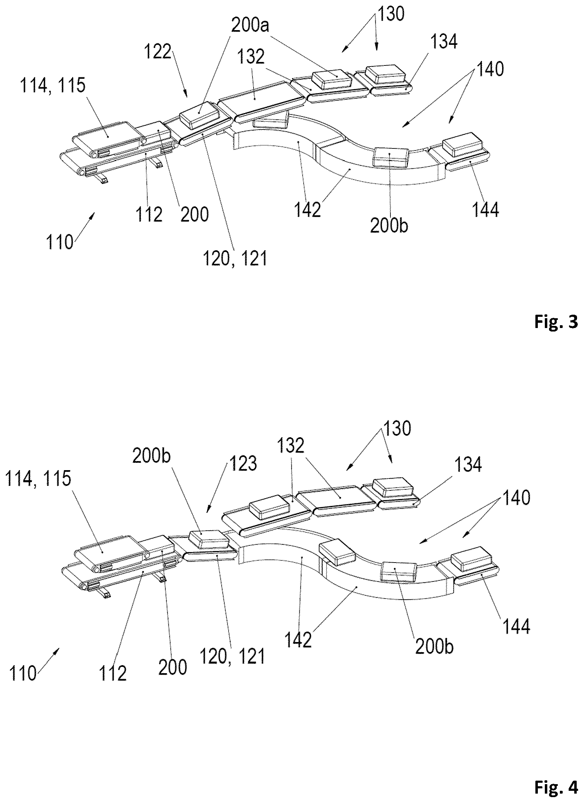

Wie im Detail auch aus **Fig. 3** ersichtlich, ist die Verteilvorrichtung 120 dazu eingerichtet, in einer ersten, oberen Position 122 der Verteilvorrichtung 120 Stückgüter 200, beispielsweise Säcke 201, auf eine erste Zufuhrvorrichtung 130 der erfindungsgemäßen Vorrichtung 100 für das Zusammenstellen von Stückgutlagen aufzuteilen. Diejenigen Stückgüter, die von der Verteilvorrichtung 120 der ersten Zufuhrvorrichtung 130 aufgegeben werden, werden nachfolgend als Stückgüter 200a bezeichnet. Eine Anzahl der Stückgüter 200a, die mit der ersten Zufuhrvorrichtung 130 befördert werden, bildet im Weiteren eine erste Stückgutreihe 211.

Die erste Zufuhrvorrichtung 130 umfasst hier beispielsweise mehrere erste Zufuhrbänder 132, ein erstes Taktband 134 zum Vereinzeln der Stückgüter 200a bzw. Säcke 201, eine erste Drehvorrichtung 136 zum geeigneten Drehen und/oder Wenden einzelner Stückgüter 200a bzw. Säcke 201, sowie ein erstes Lagenformband 138. Eine Transportrichtung TR1 der Stückgüter 200a bzw. Säcke 201 auf der ersten Zufuhrvorrichtung 130 ist durch einen Pfeil TR1 symbolisiert.

Wie im Detail auch aus **Fig. 4** ersichtlich, ist diese Verteilvorrichtung 120 weiters dazu eingerichtet, in einer zweiten, unteren Position 123 der Verteilvorrichtung 120 Stückguteinheiten 200 bzw. Säcke 201 auf eine zweite Zufuhrvorrichtung 140 aufzuteilen. Diejenigen Stückgüter, die von der Verteilvorrichtung 120 der zweiten Zufuhrvorrichtung 140 aufgegeben werden, werden nachfolgend als Stückgüter 200b bezeichnet. Eine Anzahl der Stückgüter 200b, die mit der zweiten Zufuhrvorrichtung 140 befördert werden, bildet im Weiteren eine zweite Stückgutreihe 212.

Die zweite Zufuhrvorrichtung 140 umfasst hier - vergleichbar mit der ersten Zufuhrvorrichtung 130 - beispielsweise mehrere zweite Zufuhrbänder 142, ein zweites Taktband 144 zum Vereinzeln der Stückguteinheiten 200b bzw. Säcke 201, eine zweite Drehvorrichtung 146 zum geeigneten Drehen und/oder Wenden einzelner Stückgüter 200b bzw. Säcke 201, sowie ein zweites Lagenformband 148. Eine Transportrichtung TR2 der Stückguteinheiten 200b bzw. Säcke 201 auf der zweiten Zufuhrvorrichtung 140 ist durch einen Pfeil TR2 symbolisiert.

Zurückkommend zu den Figuren 1 und 2 umfasst die erfindungsgemäße Vorrichtung 100 für das Zusammenstellen von Stückgutlagen weiters eine Übergabevorrichtung 150 zur Manipulation und/oder zur Herstellung einer Stückgutlage, um - wie hier dargestellt - beispielsweise zwei Stückgüter 200a einer ersten Stückgutreihe 211 sowie drei Stückgüter 200b einer zweiten Stückgutreihe 212 gemeinsam zu einer Stückgutlage 220 aus insgesamt fünf Stückgütern anordnen zu können. Die Übergabevorrichtung umfasst dazu einen Übergabetisch 151 mit einer im Wesentlichen rechteckförmigen Übergabefläche 152, deren Kontur entlang ihrer Seitenränder zur besseren Übersicht in den nachfolgenden Abbildungen teilweise auch strichpunktiert hervorgehoben ist.

Die erste Zufuhrvorrichtung 130, die für die Zufuhr von Stückgütern 200a bzw. Säcken 201 der ersten Stückgutreihe 211 an die Übergabefläche 152 dient, ist hier benachbart zu einem ersten Seitenrand 155 der Übergabefläche 152, wobei der erste Seitenrand 155 in Fig. 2 strichpunktiert gekennzeichnet ist. Die zweite Zufuhrvorrichtung 140, die für die Zufuhr von Stückgütern 200b bzw. Säcken 201 der zweiten Stückgutreihe 212 an die Übergabefläche 152 dient, ist hier benachbart zu einem zweiten Seitenrand 156 der Übergabefläche 152, wobei der zweite Seitenrand 156 in Fig. 2 strichpunktiert gekennzeichnet ist. Der zweite Seitenrand 156 liegt hier in der gezeigten Anordnung dem ersten Seitenrand 155 gegenüber.

Wie weiter vorne ausgeführt, ist im Rahmen der Erfindung beispielsweise auch eine Ausführung denkbar, bei der eine rechtwinkelige Zuführung von Stückgütern 200a der ersten Stückgutreihe 211 sowie von Stückgütern 200b der zweiten Stückgutreihe 212 "über Eck" erfolgt. Die erste Zufuhrposition Z1, die benachbart zu einem ersten Seitenrand 155 angeordnet ist, liegt in diesem Fall also im Wesentlichen rechtwinkelig "über Eck" zur zweiten Zufuhrposition Z2, die benachbart zu einem zweiten Seitenrand 156 der Übergabefläche 152 angeordnet liegt. Diese mögliche Ausführungsvariante ist in den Figuren nicht explizit gezeigt und wird im Folgenden auch nicht weiter vertieft.

Zurückkommend auf die in den Figuren 1 und 2 gezeigte Ausführung werden somit vorteilhaft von der ersten Zufuhrvorrichtung 130 eine Anzahl von Stückgütern 200a bzw. von Säcken 201 in einer ersten Stückgutreihe 211 auf dem ersten Lagenformband 138 an einer ersten Zufuhrposition Z1, die benachbart ist zum ersten Seitenrand 155 der Übergabefläche 152, bereitgestellt. Von der zweiten Zufuhrvorrichtung 140 werden eine Anzahl von Stückgütern 200b bzw. Säcken 201 in einer zweiten Stückgutreihe 212 auf dem zweiten Lagenformband 148 an einer zweiten Zufuhrposition Z2, die benachbart ist zum zweiten Seitenrand 156 der Übergabefläche 152, bereitgestellt, wobei der zweite Seitenrand 156 dem ersten Seitenrand 155 der Übergabefläche 152 gegenüberliegt. Folglich liegt auch die erste Zufuhrposition Z1 an einer gegenüberliegenden Seite der Übergabefläche 152 in Bezug zur zweiten Zufuhrposition Z2.

Vorteilhaft können in dieser Anordnung, wie in Fig. 1 und Fig. 2 veranschaulicht, die mit der ersten Zufuhrvorrichtung 130 zugeführte Anzahl von Stückgütern 200a der ersten Stückgutreihe 211 sowie die mit der zweiten Zufuhrvorrichtung 140 zugeführte Anzahl von Stückgütern 200b der zweiten Stückgutreihe 212 unabhängig voneinander von zwei unterschiedlichen, sich hier einander gegenüberliegenden, Seiten auf die Übergabefläche 152 übergeben werden.

Innerhalb der Übergabefläche 152 befindet sich eine verschließbare Entladeöffnung 160, die hier rein beispielhaft von zwei Entladeplatten 163 gebildet ist, die zwischen einer geschlossenen Position und einer geöffneten Position hin und her bewegt werden können. Die Funktionsweise der verschließbaren Entladeöffnung 160 wird nachfolgend noch im Detail erläutert werden.

Außerdem umfasst die erfindungsgemäße Vorrichtung eine Schiebevorrichtung 170, wobei an einem Schieberahmen ein erster Abschieber 172 sowie ein zweiter Abschieber 174 beweglich befestigt sind. Der erste Abschieber 172 dient zum Schieben von Stückgütern 200a der ersten Stückgutreihe 211 in Querrichtung bzw. orthogonal zum ersten Seitenrand 155 von der ersten Zufuhrposition Z1, die sich hier auf dem ersten Lageformband 136 der ersten Zufuhrvorrichtung 130 befindet, in eine erste Übergabeposition der ersten Stückgutreihe 211 auf der Übergabefläche 152. Der zweite Abschieber 174 befindet sich an einer zum ersten Abschieber 172 gegenüberliegenden Seite bzw. Position des Schieberahmens. Der zweite Abschieber 174 dient zum Schieben von Stückgütern 200b der zweiten Stückgutreihe 212 in Querrichtung bzw. orthogonal zum zweiten Seitenrand 156 von der zweiten Zufuhrposition Z2, die sich hier auf dem zweiten Lageformband 146 der zweiten Zufuhrvorrichtung 140 befindet, in eine zweite Übergabeposition der zweiten Stückgutreihe 212 ebenfalls auf der Übergabefläche 152.

Wie in Fig. 1 ersichtlich befindet sich hier unterhalb der Übergabefläche 152 bereits ein Stückgutstapel 230 mit mehreren Stückgutlagen 220. Mittels einer Hubvorrichtung 300, die hier in Kombination mit der erfindungsgemäßen Vorrichtung 100 für das Zusammenstellen von Stückgutlagen vorgesehen ist, kann der Stückgutstapel 230 in an sich bekannter Weise möglichst nahe von unten kommend an die Unterseite des Übergabetisches 151 bzw. an die Unterseite der Übergabefläche 152 herangeführt zu werden. Eine fertig gebildete Stückgutlage 220, die auf der Oberseite der Übergabefläche 152 entsprechend angeordnet ist, kann bei geöffneter Entladeöffnung 160 sodann als weitere Stückgutlage 220 dem darunter gelegenen, in Bildung befindlichen Stückgutstapel 230 übergeben werden. Als Auflage für den Stückgutstapel 230 dient hier beispielsweise eine Transportpalette 310.

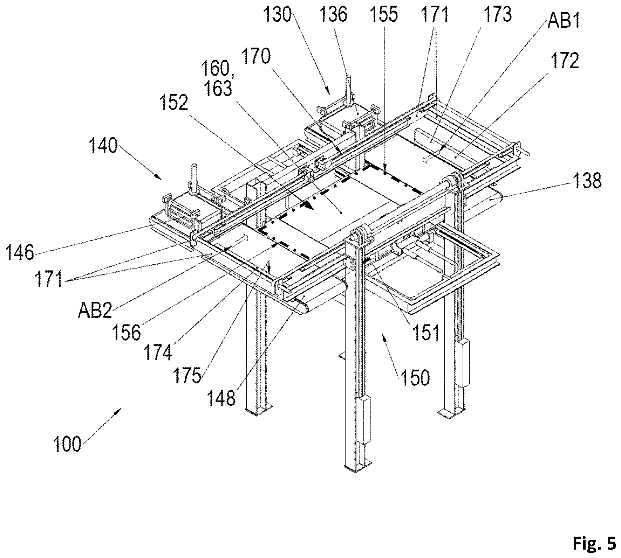

**Fig. 5** zeigt ein Detail der erfindungsgemäßen Vorrichtung 100 für das Zusammenstellen von Stückgutlagen mit einer Übergabevorrichtung 150 sowie mit einer Schiebevorrichtung 170 jeweils in Ausgangslage ohne Stückgut vor der Bildung einer neuen Stückgutlage. In Fig. 5 befinden sich die beiden Abschieber 172, 174 jeweils in ihrer Ausgangslage in einer hinteren Zufuhrposition außerhalb der ersten Zufuhrposition Z1 auf dem ersten Formband 138 bzw. außerhalb der zweiten Zufuhrposition Z2 auf dem zweiten Formband 148. In dieser hinteren Zufuhrposition geben die beiden Abschieber 172, 174 somit jeweils die Bahn frei für die Zufuhr von Stückgütern einer weiteren ersten Stückgutreihe 211 mit der ersten Zufuhrvorrichtung 130 bzw. von Stückgütern einer weiteren zweiten Stückgutreihe 212 mit der zweiten Zufuhrvorrichtung 140.

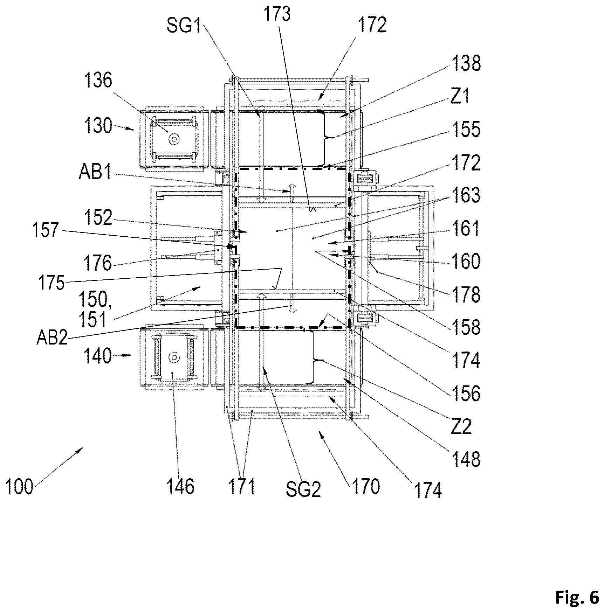

**Fig. 6** zeigt in einer Draufsicht die in Fig. 5 veranschaulichte Detailansicht. Unterschiedlich zu Fig. 5 ist hier in Fig. 6 im Wesentlichen nur, dass sich die beiden Abschieber 172, 174 jeweils in ausgefahrener Lage in ihrer vorderen Übergabeposition befinden, die der jeweiligen Übergabeposition einer Stückgutreihe auf der Übergabefläche 152 entspricht. Die folgende Beschreibung betrifft jedoch gleichermaßen die Abbildungen Fig. 5 und Fig. 6.

Beginnend mit der Übergabevorrichtung 150, die hier ohne darauf befindliches Stückgut gut erkennbar ist, ist die Kontur der rechteckigen Übergabefläche 152 des Übergabetisches 151 mit strichpunktierten Seitenrändern gekennzeichnet. Ein erster Seitenrand 155 der Übergabefläche 152 ist benachbart zur ersten Zufuhrposition Z1, die sich hier auf dem ersten Formband 138 der ersten Zufuhrvorrichtung 130 befindet. Ein zweiter Seitenrand 156 der Übergabefläche 152 liegt dem ersten Seitenrand 155 gegenüber und ist benachbart zur zweiten Zufuhrposition Z2, die sich hier auf dem zweiten Formband 148 der zweiten Zufuhrvorrichtung 140 befindet. Ein dritter Seitenrand 157 der Übergabefläche 152 befindet sich in Fig. 6 in der linken Bildhälfte zwischen dem ersten Seitenrand 155 und dem zweiten Seitenrand 156. Ein vierter Seitenrand 158 der Übergabefläche 152 befindet sich in Fig. 6 in der rechten Bildhälfte zwischen dem ersten Seitenrand 155 und dem zweiten Seitenrand 156, wobei der vierte Seitenrand 158 dem dritten Seitenrand 157 gegenüberliegt.

Die Schiebevorrichtung 170 umfasst einen Schieberahmen 171, an dem der erste Abschieber 172, der zweite Abschieber 174, sowie ein erster Ausrichtschieber 176 und ein dem ersten Ausrichtschieber 176 gegenüberliegender zweiter Ausrichtschieber 178 angeordnet sind. Der erste Abschieber 172 umfasst eine Abschiebeplatte mit einer ersten Kontaktfläche 173, wobei im Betrieb während des Abschiebens die Stückgüter 200a der ersten Stückgutreihe 211 zumindest abschnittsweise die erste Kontaktfläche 173 des ersten Abschiebers 172 berühren oder an dieser anliegen.

Eine Schubrichtung AB1 des ersten Abschiebers 172 ist durch einen Pfeil AB1 symbolisiert. Ein erster Schiebeweg SG1 des ersten Abschiebers 172 ist in Fig. 6 durch einen Doppelpfeil SG1 symbolisiert. Wie vorhin festgehalten befindet sich in Fig. 6 der erste Abschieber 172 in ausgefahrener Lage in seiner vorderen Übergabeposition, die der jeweiligen Übergabeposition der Stückgüter der ersten Stückgutreihe 211 auf der Übergabefläche 152 entspricht. In Fig. 6 ist strichliert und ebenfalls mit Bezugszeichen 172 auch die Ausgangslage des ersten Abschiebers in seiner hinteren Zufuhrposition außerhalb der ersten Zufuhrposition Z1 skizziert, so wie diese in Fig. 5 ersichtlich ist. Eine Länge des mit Doppelpfeil markierten ersten Schiebewegs SG1 des ersten Abschiebers 172 entspricht dem ersten Schiebeweg SG1 der Stückgüter der ersten Stückgutreihe 211 von der ersten Zufuhrposition Z1 in eine erste Übergabeposition der ersten Stückgutreihe 211 auf der Übergabefläche 152.

Der zweite Abschieber 174 umfasst eine Abschiebeplatte mit einer zweiten Kontaktfläche 175, wobei im Betrieb während des Abschiebens die Stückgüter 200b der zweiten Stückgutreihe 212 zumindest abschnittsweise die zweite Kontaktfläche 175 des zweiten Abschiebers 174 berühren oder an dieser anliegen.

Eine Schubrichtung AB2 des zweiten Abschiebers 174 ist durch einen Pfeil AB2 symbolisiert. Ein zweiter Schiebeweg SG2 des zweiten Abschiebers 174 ist in Fig. 6 durch einen Doppelpfeil SG2 symbolisiert. Wie vorhin festgehalten befindet sich in Fig. 6 auch der zweite Abschieber 174 in ausgefahrener Lage in seiner vorderen Übergabeposition, die der jeweiligen Übergabeposition der zweiten Stückgutreihe 212 auf der Übergabefläche 152 entspricht. In Fig. 6 ist strichliert eingezeichnet und ebenfalls mit Bezugszeichen 174 versehen auch die Ausgangslage des zweiten Abschiebers 174 in seiner hinteren Zufuhrposition außerhalb der zweiten Zufuhrposition Z2 skizziert, so wie diese in Fig. 5 ersichtlich ist. Eine Länge des mit Doppelpfeil markierten zweiten Schiebewegs SG2 des zweiten Abschiebers 174 entspricht dem zweiten Schiebeweg SG2 der zweiten Stückgutreihe 212 von der zweiten Zufuhrposition Z2 in eine zweite Übergabeposition der zweiten Stückgutreihe 212 auf der Übergabefläche 152.

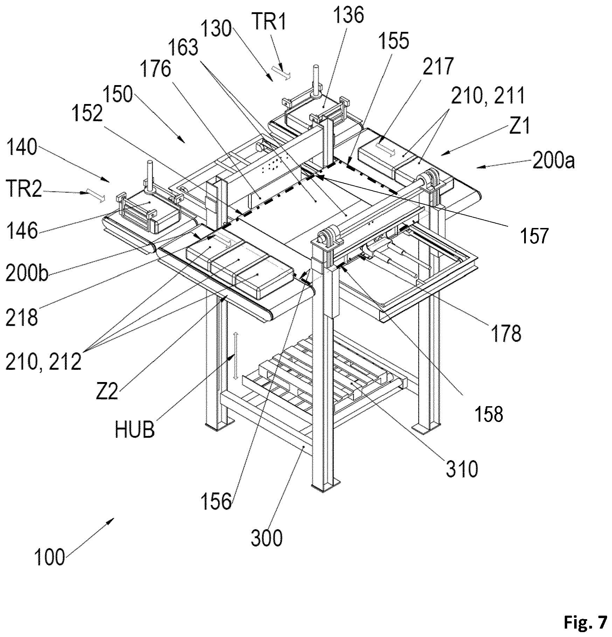

**Fig. 7** zeigt ein Detail der erfindungsgemäßen Vorrichtung 100 für das Zusammenstellen von Stückgutlagen mit einer Übergabevorrichtung 150 sowie mit einer Anzahl von Stückgütern in zwei Stückgutreihen 211, 212 jeweils in Zufuhrposition Z1, Z2 zur Bildung einer ersten Stückgutlage 220, wobei die Schiebevorrichtung 170 der Übersicht wegen hier ohne Abschieber 172, 174 gezeigt ist.

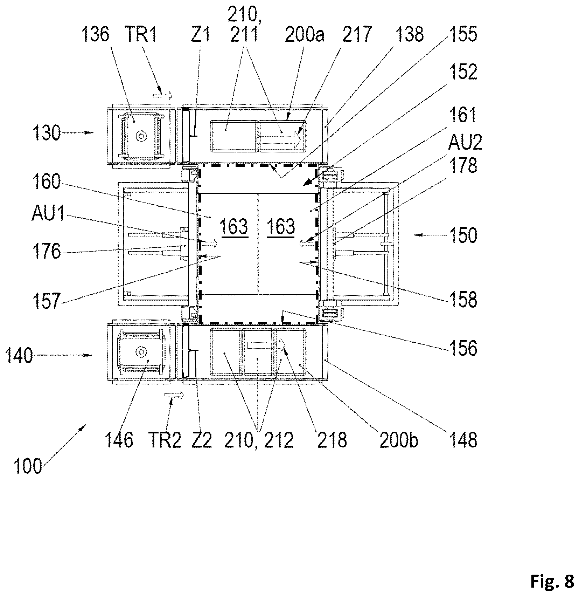

**Fig. 8** zeigt in einer Draufsicht die in Fig. 7 veranschaulichte Detailansicht. Die folgende Beschreibung bezieht sich auf beide Abbildungen Fig. 7 und Fig. 8.

Die beiden Stückgutreihen 210 umfassen hier eine erste Stückgutreihe 211 mit zwei Stückgütern 200a in Form von Säcken 201 sowie eine zweite Stückgutreihe 212 mit drei Stückgütern 200b ebenfalls in Form von Säcken 201. Die zwei Stückgüter 200a bzw. Säcke 201 der ersten Stückgutreihe 211 liegen flächig in der ersten Zufuhrposition Z1 auf dem ersten Lagenformband 138 auf. Die zwei Säcke 201 liegen dabei mit ihren kürzeren Schmalseiten in Längsrichtung 217 der ersten Stückgutreihe 211 aneinander an. Diese Stückgüter 200a der ersten Stückgutreihe 211 bilden somit eine erste Halblage. Die drei Stückgüter 200b bzw. Säcke 201 der zweiten Stückgutreihe 212 liegen mit ihren längeren Schmalseiten in Längsrichtung 218 der zweiten Stückgutreihe 212 aneinander an und befinden sich in der zweiten Zufuhrposition Z2 auf dem zweiten Lagenformband 148. Die Stückgüter 200b der zweiten Stückgutreihe 212 bilden eine zweite Halblage. Die Stückgüter 200a, 200b der beiden Halblagen bilden gemeinsam eine Stückgutlage 220.

In Fig. 7 sind entlang der beiden einander gegenüberliegenden Seitenränder 157 und 158, also dem dritten Seitenrand 157 und dem gegenüberliegenden vierten Seitenrand 158, ein erster Ausrichtschieber 176 sowie ein gegenüberliegender zweiter Ausrichtschieber 178 angeordnet, die zum seitlichen Ausrichten des auf der Übergabefläche 152 aufgelegten Stückgutes dienen. Die beiden Ausrichtschieber 176 und 178 sind in zueinander entgegengesetzte Schubrichtungen verfahrbar. Die Hubvorrichtung 300 mit einer noch leeren Transportpalette 310 befindet sich in ihrer Ausgangsposition unten bzw. fern von dem Übergabetisch 151. Ein Doppelpfeil HUB symbolisiert die Hubrichtungen der Hubvorrichtung 300.

Wie in Fig. 8 eingezeichnet, ist die Schubrichtung AU1 des ersten Ausrichtschiebers 176 durch einen Pfeil AU1 symbolisiert. Die Schubrichtung AU2 des zweiten Ausrichtschiebers 178 ist durch einen Pfeil AU2 symbolisiert. Die beiden Ausrichtschieber 176, 178 befinden sich jeweils in ihrer Ausgangsposition in zurückgefahrener Lage. Die mit strichpunktierten Konturlinien entlang ihrer Seitenränder 155, 156, 157, 158 markierte Übergabefläche 152 ist entleert bzw. frei von Stückgut und kann zum Aufschieben der beiden bereitgestellten Stückgutreihen 211, 212 zur Bildung einer neuen Stückgutlage dienen. Die beiden Entladeplatten 163, die die Entladeöffnung 160 innerhalb der Übergabefläche 152 bilden, befinden sich in einer geschlossenen Position 161.

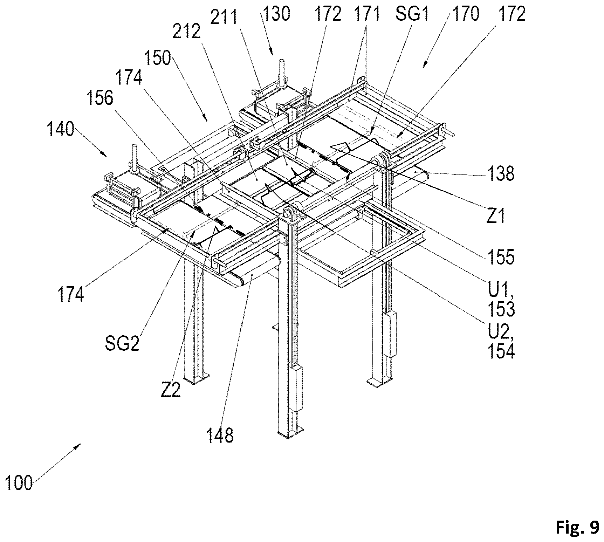

**Fig. 9** stellt ein Detail der erfindungsgemäßen Vorrichtung 100 für das Zusammenstellen von Stückgutlagen mit einer Schiebevorrichtung 170 dar, wobei die Stückgüter der zwei Stückgutreihen 211, 212 jeweils bereits in Übergabeposition U1, U2 zu einer ersten Stückgutlage 220 auf die Übergabefläche 152 geschoben sind.

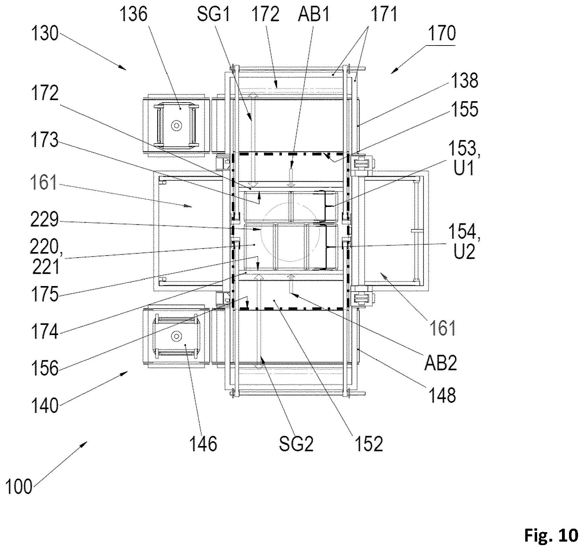

**Fig. 10** zeigt die in Fig. 9 veranschaulichte Anordnung von oben. Eine erste Teilfläche 153 der Übergabefläche 152 ist dabei von der ersten Übergabeposition U1 von Stückgütern der ersten Stückgutreihe 211 eingenommen. Eine zweite Teilfläche 154 der Übergabefläche 152 ist von der zweiten Übergabeposition U2 von Stückgütern der zweiten Stückgutreihe 212 eingenommen. Die beiden Teilflächen 153 und 154 befinden sich jeweils innerhalb der verschließbaren Entladeöffnung 160.

In Fig. 10 ist ein Lagenbild 229 dieser Stückgutlage 220, die hier die erste Stückgutlage 221 bildet, mit einem strichlierten Kreis 229 gekennzeichnet. Zweckmäßig unterscheiden sich die Lagenbilder 229 einer gegebenenfalls nachfolgenden zweiten Stückgutlage 222 sowie einer dritten Stückgutlage 223 jeweils voneinander bzw. von jenem hier dargestellten Lagenbild 229 der ersten Stückgutlage 221, um durch Variation der Lagenbilder der einzelnen Stückgutlagen einen stabilen Lagenstapel zu gewährleisten. Der erste Abschieber 172 befindet sich hier in ausgefahrener Lage in seiner vorderen Übergabeposition. Der Schiebeweg SG1 des ersten Abschiebers 172 entspricht jenem Schiebeweg SG1 zum Schieben von Stückgütern der ersten Stückgutreihe 211 von der ersten Zufuhrposition Z1, die entlang des ersten Seitenrands 155 angeordnet ist, in die hier gezeigte erste Übergabeposition U1 auf der Übergabefläche 152.

Ebenso befindet sich der zweite Abschieber 174 hier in ausgefahrener Lage in seiner vorderen Übergabeposition. Der Schiebeweg SG2 des zweiten Abschiebers 174 entspricht jenem Schiebeweg SG2 zum Schieben von Stückgütern der zweiten Stückgutreihe 212 von der zweiten Zufuhrposition Z2, die entlang des zweiten Seitenrands 156 angeordnet ist, in die hier gezeigte zweite Übergabeposition U2 auf der Übergabefläche 152. Die Entladeplatten 163 befinden sich noch in einer geschlossenen Position 161.

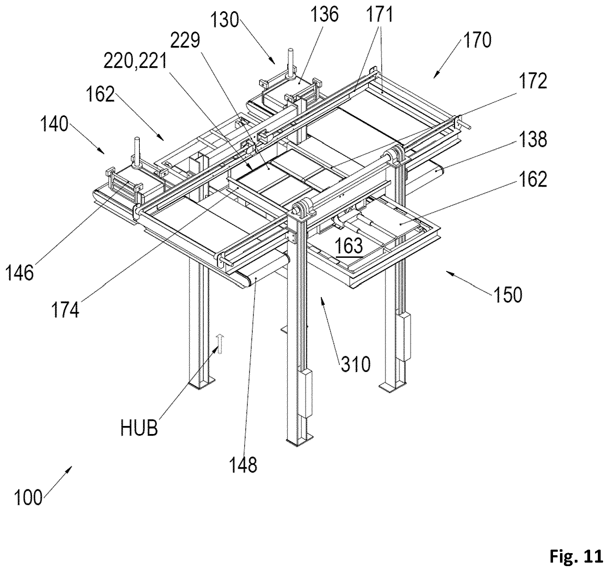

**Fig. 11** zeigt ein Detail der erfindungsgemäßen Vorrichtung 100 für das Zusammenstellen von Stückgutlagen, wobei die Entladeöffnung 160 in der Übergabefläche 152 geöffnet und die erste Stückgutlage 221 bereits auf eine unterhalb befindliche Transportpalette 310 übergeben ist. Die Hubvorrichtung 300 ist zu diesem Zwecke ganz nach oben in Hubrichtung HUB verfahren, damit die leere Transportpalette 310 möglichst knapp unterhalb der Übergabefläche 152 zur schonenden Aufnahme der vorbereiteten ersten Stückgutlage 221 bereitsteht.

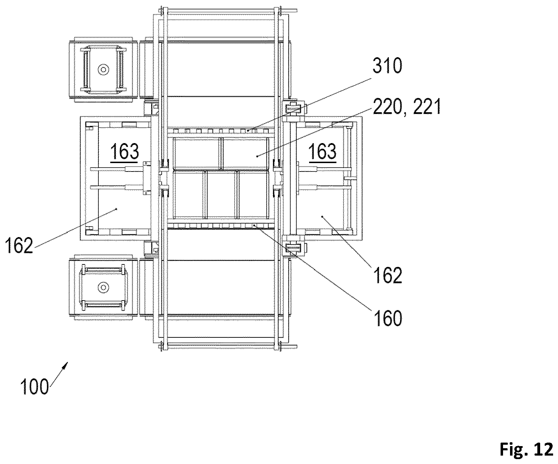

**Fig. 12** zeigt die in Fig. 11 veranschaulichte Anordnung von oben. Die beiden Entladeplatten 163 befinden sich jeweils in geöffneter Position 162 der Entladeöffnung 160 und sind dazu an gegenüberliegenden Seiten jeweils außerhalb der Entladeöffnung 160 verfahren.

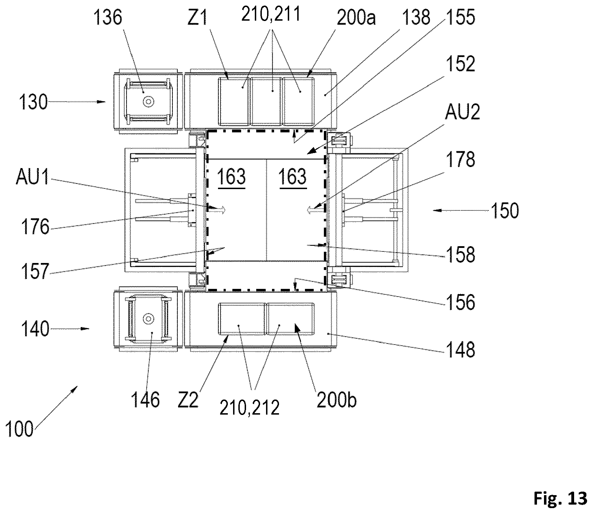

**Fig. 13** zeigt die erfindungsgemäße Vorrichtung 100 für das Zusammenstellen von Stückgutlagen nach erfolgter Übergabe der ersten Stückgutlage 221 mit entleerter Übergabefläche 152. Es befinden sich bereits wieder Stückgüter von zwei neuen Stückgutreihen 211, 212 jeweils in Zufuhrposition Z1, Z2 zur Bildung einer weiteren, zweiten Stückgutlage 222. Es sind hier drei Stückgüter 200a der ersten Stückgutreihe 211 in der ersten Zufuhrposition Z1. Es befinden sich zwei Stückgüter 200b der zweiten Stückgutreihe 212 in der zweiten Zufuhrposition Z2. Vergleichbar mit Fig. 8 werden auch hier in Fig. 13 die beiden Abschieber 172, 174 sowie der Schieberahmen 171 der Schiebevorrichtung 170 zur besseren Übersicht nicht gezeigt. Die beiden seitlichen Ausrichtschieber 176, 178 befinden sich jeweils in ihrer Ausgangsposition in zurückgefahrener Lage, um die gesamte Übergabefläche 152 frei zu geben.

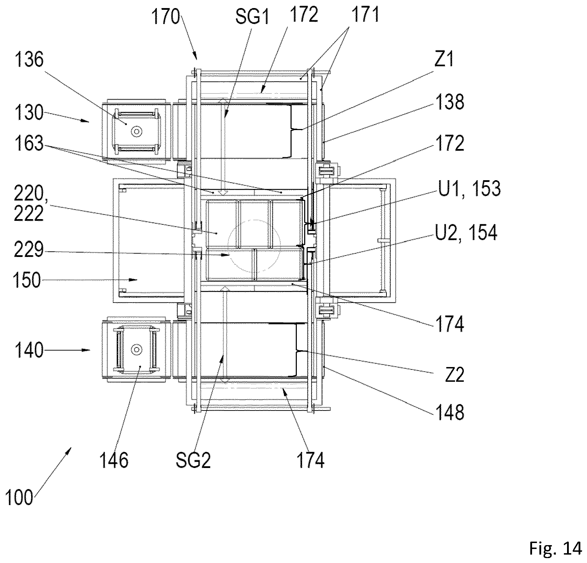

**Fig. 14** zeigt die erfindungsgemäße Vorrichtung 100 für das Zusammenstellen von Stückgutlagen, wobei die Stückgüter der zwei Stückgutreihen 211, 212 jeweils bereits in Übergabeposition U1, U2 zu einer zweiten Stückgutlage 222 auf die Übergabefläche geschoben sind. Fig. 14 ist mit Fig. 10 vergleichbar und unterscheidet sich gegenüber Fig. 10 im Wesentlichen nur durch das im Vergleich zur ersten Stückgutlage 221 veränderte Lagenbild 229 der hier in Fig. 14 gezeigten zweiten Stückgutlage 222, die aus drei Stückgütern 200a der ersten Stückgutreihe 211 sowie aus zwei Stückgütern 200b der zweiten Stückgutreihe 212 gebildet ist. Zur weiteren Beschreibung wird auf die vorigen Ausführungen zu den Figuren 9 und 10 verwiesen.

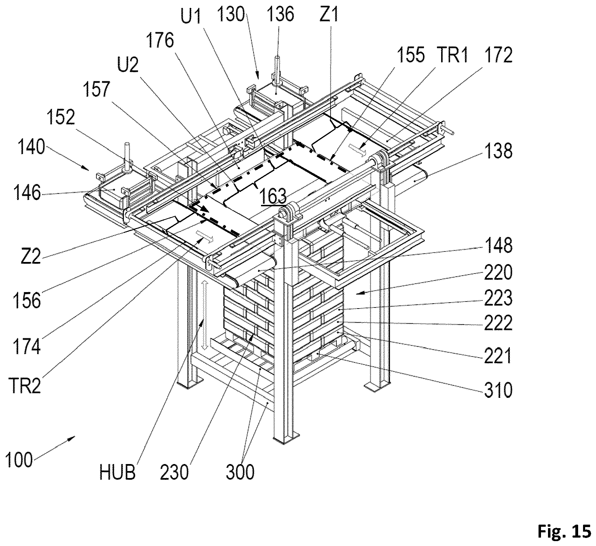

**Fig. 15** stellt in einer isometrischen Ansicht ein Detail der erfindungsgemäßen Vorrichtung 100 für das Zusammenstellen von Stückgutlagen samt einem mit mehreren Stückgutlagen 221, 222, 223 belegten, fertig gestapelten Stückgutstapel 230 auf einer Transportpalette 310 dar. Die Hubvorrichtung 300 befindet sich dazu in ihrer unteren Lage. Der fertig gestapelte Stückgutstapel 230 bzw. die fertig gestapelte Transportpalette 310 kann der Hubvorrichtung 300 entnommen und entsprechend verpackt, gelagert und/oder transportiert werden. In Fig. 15 ist die Übergabevorrichtung 150 ohne Stückgut dargestellt, wobei in den beiden Drehvorrichtungen 136, 146 bereits Stückguteinheiten zur Bildung neuer Stückgutreihen für eine nächste Stapelaufgabe warten.

Der besseren Übersicht wegen sind in den Figuren die für einen automatisierten Betrieb einer Vorrichtung gegebenenfalls erforderlichen Steuer- und Regeleinrichtungen sowie entsprechende Sensoren zur Betriebsüberwachung nicht dargestellt. Derartige mess- und regeltechnische Steuerungsmittel sind jedoch dem Fachmann auf dem Gebiet von Palettiervorrichtungen an sich bekannt.

Die vorhin in den Figuren dargestellte Betriebsweise der Vorrichtung zeigt der Einfachheit halber jeweils das Ausbilden von Stückgutlagen mit Stückgütern von zwei Stückgutreihen. Gegebenenfalls können auf der Übergabefläche 152 jedoch auch Stückgüter von mehr als zwei Stückgutreihen gleichzeitig angeordnet werden. Dazu können beispielsweise mit einer oder mit beiden Zufuhrvorrichtungen 130, 140 definierte Anzahlen von Stückgütern von zwei Stückgutreihen hintereinander bzw. seriell zugeführt und diese Stückgüter durch wiederholtes Betätigen der entsprechenden Abschieber 172, 174 hintereinander an die entsprechenden Übergabepositionen auf der Übergabefläche 152 übergeben werden. Somit können bedarfsweise auch Stückgutlagen beispielsweise mit Stückgütern von drei oder von vier Stückgutreihen gebildet werden.

Ebenso können bei einer erfindungsgemäßen Vorrichtung auch eine dritte und/oder eine vierte Zufuhrvorrichtung vorgesehen sein. Mit der dritten und/oder vierten Zufuhrvorrichtung können dazu beispielsweise Stückgüter einer weiteren dritten und/oder vierten Stückgutreihe an eine dritte und/oder vierte Zufuhrposition herangeführt werden, wobei die dritte und/oder vierte Zufuhrposition benachbart zur ersten, zweiten und/oder dritten Randseite der Übergabefläche sein kann bzw. sein können.

### BEZUGSZEICHENLISTE

- 100: Vorrichtung für das Zusammenstellen von Stückgutlagen
- 110: Fördervorrichtung
- 112: Förderband
- 113: Rollenfördereinrichtung
- 114: Formband
- 115: Pressband
- 120: Verteilvorrichtung
- 121: schwenkbares Verteilerband
- 122: erste, obere Position der Verteilvorrichtung
- 123: zweite, untere Position der Verteilvorrichtung
- 130: erste Zufuhrvorrichtung
- 132: erstes Zufuhrband
- 134: erstes Taktband
- 136: erste Drehvorrichtung
- 138: erstes Lagenformband
- 140: zweite Zufuhrvorrichtung
- 142: zweites Zufuhrband
- 144: zweites Taktband
- 146: zweite Drehvorrichtung
- 148: zweites Lagenformband
- 150: Übergabevorrichtung für eine Stückgutlage
- 151: Übergabetisch
- 152: Übergabefläche
- 153: erste Übergabeteilfläche für eine erste Stückgutreihe
- 154: zweite Übergabeteilfläche für eine zweite Stückgutreihe
- 155: erster Seitenrand der Übergabefläche
- 156: zweiter Seitenrand der Übergabefläche
- 157: dritter Seitenrand der Übergabefläche
- 158: vierter Seitenrand der Übergabefläche
- 160: Entladeöffnung
- 161: geschlossene Position der Entladeöffnung
- 162: geöffnete Position der Entladeöffnung
- 163: Entladeplatte
- 170: Schiebevorrichtung
- 171: Schieberahmen
- 172: erster Abschieber
- 173: Kontaktfläche des ersten Abschiebers
- 174: zweiter Abschieber
- 175: Kontaktfläche des zweiten Abschiebers
- 176: erster Ausrichtschieber
- 178: zweiter Ausrichtschieber
- 200: Stückgut
- 200a: Stückgut der ersten Stückgutreihe
- 200b: Stückgut der zweiten Stückgutreihe
- 201: Sack
- 210: Stückgutreihe
- 211: erste Stückgutreihe; erste Halblage
- 212: zweite Stückgutreihe; zweite Halblage
- 217: Längsrichtung der ersten Stückgutreihe
- 218: Längsrichtung der zweiten Stückgutreihe
- 220: Stückgutlage
- 221: erste Stückgutlage eines Stückgutstapels
- 222: zweite Stückgutlage eines Stückgutstapels
- 223: dritte Stückgutlage eines Stückgutstapels
- 229: Lagenbild
- 230: Stückgutstapel
- 300: Hubvorrichtung
- 310: Transportpalette
- AB1: Schubrichtung des ersten Abschiebers (Pfeil)
- AB2: Schubrichtung des zweiten Abschiebers (Pfeil)
- AU1: Schubrichtung des ersten Ausrichtschiebers (Pfeil)
- AU2: Schubrichtung des zweiten Ausrichtschiebers (Pfeil)
- HUB: Hubrichtung der Hubvorrichtung (Doppelpfeil)
- SG1: Schiebeweg der ersten Stückgutreihe (Doppelpfeil)
- SG2: Schiebeweg der zweiten Stückgutreihe (Doppelpfeil)
- TR1: Transportrichtung der ersten Zufuhrvorrichtung (Pfeil)
- TR2: Transportrichtung der zweiten Zufuhrvorrichtung (Pfeil)
- U1: erste Übergabeposition
- U2: zweite Übergabeposition
- Z1: erste Zufuhrposition
- Z2: zweite Zufuhrposition

## Patentansprüche

1. Vorrichtung (100) für das Zusammenstellen von Stückgutlagen (220) mittels Stückgüter (200a, 200b) aus wenigstens zwei Reihen (211, 212) von Stückgütern (200a, 200b), vorzugsweise zur Herstellung von mindestens einem Stückgutstapel (230) mit mehreren Stückgutlagen (220), die Vorrichtung (100) umfassend:
- eine Übergabevorrichtung (150) mit einer Übergabefläche (152) für das Zusammenstellen einer Stückgutlage (220) aus einer Anzahl von Stückgütern (200a) der ersten Stückgutreihe (211) und einer Anzahl von Stückgütern (200b) der zweiten Stückgutreihe (212) ;
- eine erste Zufuhrvorrichtung (130) für die Zufuhr der Anzahl von Stückgütern (200a) der ersten Stückgutreihe (211) an eine erste Zufuhrposition (Z1), wobei die erste Zufuhrposition (Z1) benachbart ist zu einem ersten Seitenrand (155) der Übergabefläche (152);
- eine Schiebevorrichtung (170) mit einem ersten Abschieber (172), wobei der erste Abschieber (172) zum Schieben der Anzahl von Stückgütern (200a) der ersten Stückgutreihe (211) von der ersten Zufuhrposition (Z1) in eine erste Übergabeposition (U1) auf der Übergabefläche (152) eingerichtet ist, wobei
- zumindest eine zweite Zufuhrvorrichtung (140) für die Zufuhr der Anzahl von Stückgütern (200b) zumindest einer zweiten Stückgutreihe (212) an eine zweite Zufuhrposition (Z2) vorgesehen ist, wobei die zweite Zufuhrposition (Z2) benachbart ist zu einem zum ersten Seitenrand (155) unterschiedlichen zweiten Seitenrand (156, 157, 158) der Übergabefläche (152), und
- wobei die Schiebevorrichtung (170) zumindest einen zweiten Abschieber (174) umfasst, der zum Schieben der Anzahl von Stückgütern (200b) der zumindest einen zweiten Stückgutreihe (212) von der zweiten Zufuhrposition (Z2) in eine zweite Übergabeposition (U2) auf der Übergabefläche (152) eingerichtet ist; und wobei
- eine erste Schubrichtung (AB1) des ersten Abschiebers (172) zum Schieben einer Anzahl von Stückgütern (200a) der ersten Stückgutreihe (211) von der ersten Zufuhrposition (Z1) in die erste Übergabeposition (U1) auf der Übergabefläche (152) entgegengesetzt orientiert ist zu einer zweiten Schubrichtung (AB2) des zumindest einen zweiten Abschiebers (172) zum Schieben einer Anzahl von Stückgütern (200b) der zumindest einen zweiten Stückgutreihe (212) von der zweiten Zufuhrposition (Z2) in die zweite Übergabeposition (U2) auf der Übergabefläche (152),
**dadurch gekennzeichnet, dass**
die Schiebevorrichtung (170) weiters einen ersten Ausrichtschieber (176) sowie einen zweiten Ausrichtschieber (178) zum seitlichen Ausrichten der auf der Übergabefläche (152) aufgelegten Stückgüter (200a, 200b) umfasst, wobei der erste Ausrichtschieber (176) entlang eines dritten Seitenrands (157) der Übergabefläche (152) und der zweite Ausrichtschieber (178) entlang eines dem dritten Seitenrand (157) gegenüberliegenden vierten Seitenrands (158) der Übergabefläche (152) angeordnet sind, und wobei die beiden Ausrichtschieber (176, 178) in zueinander entgegengesetzten Richtungen (AU1, AU2) verfahrbar sind.

2. Vorrichtung (100) nach Anspruch 1, **dadurch gekennzeichnet, dass** die zweite Zufuhrposition (Z2) benachbart ist zu einem dem ersten Seitenrand (155) gegenüberliegenden zweiten Seitenrand (156) der Übergabefläche (152).

3. Vorrichtung (100) nach Anspruch 1 oder 2, **dadurch gekennzeichnet, dass** die erste Zufuhrvorrichtung (130) dazu eingerichtet ist, in der ersten Zufuhrposition (Z1) eine Anzahl von Stückgütern (200a) der ersten Stückgutreihe (211) entlang des ersten Seitenrands (155) der Übergabefläche (152) verteilt auszurichten, sowie die zumindest eine zweite Zufuhrvorrichtung (140) dazu eingerichtet ist, in der zweiten Zufuhrposition (Z2) eine Anzahl von Stückgütern (200b) der zumindest einen zweiten Stückgutreihe (212) entlang des zweiten Seitenrands (156, 157, 158) der Übergabefläche (152) verteilt auszurichten.

4. Vorrichtung (100) nach einem der Ansprüche 1 bis 3, **dadurch gekennzeichnet, dass** die erste Übergabeposition (U1) sowie die zweite Übergabeposition (U2) auf der Übergabefläche (152) zwischen der ersten Zufuhrposition (Z1) und der zweiten Zufuhrposition (Z2) angeordnet sind.

5. Vorrichtung (100) nach einem der Ansprüche 1 bis 4, **dadurch gekennzeichnet, dass** ein erster Schiebeweg (SG1) betreffend eine Anzahl von Stückgüter (200a) der ersten Stückgutreihe (211) von der ersten Zufuhrposition (Z1) in die erste Übergabeposition (U1) unabhängig ist von einem zweiten Schiebeweg (SG2) betreffend eine Anzahl von Stückgüter (200b) der zumindest einen zweiten Stückgutreihe (212) von der zweiten Zufuhrposition (Z2) in die zweite Übergabeposition (U2).

6. Vorrichtung (100) nach einem der Ansprüche 1 bis 5, **dadurch gekennzeichnet, dass** eine erste Teilfläche (153) der Übergabefläche (152), welche die erste Übergabeposition (U1) umfasst, sowie eine zweite Teilfläche (154) der Übergabefläche (152), welche die zweite Übergabeposition (U2) umfasst, eine verschließbare Entladeöffnung (160) ausbilden, wobei die verschließbare Entladeöffnung (160) vorzugsweise als eine zwischen einer geschlossenen (161) und einer geöffneten (162) Position verfahrbare Entladeplatte (163) ausgebildet ist.

7. Vorrichtung (100) nach einem der Ansprüche 1 bis 6, **dadurch gekennzeichnet, dass** der erste Abschieber (172) während des Schiebens einer Anzahl von Stückgütern (200a) der ersten Stückgutreihe (211) entlang eines ersten Schiebewegs (SG1) von der ersten Zufuhrposition (Z1) in die erste Übergabeposition (U1) jedes zu verschiebende Stückgut (200a) der ersten Stückgutreihe (211) zumindest abschnittsweise berührt und/oder der zumindest eine zweite Abschieber (174) während des Schiebens einer Anzahl von Stückgütern (200b) der zumindest einen zweiten Stückgutreihe (212) entlang eines zweiten Schiebewegs (SG2) von der zweiten Zufuhrposition (Z2) in die zweite Übergabeposition (U2) jedes zu verschiebende Stückgut (200b) der zweiten Stückgutreihe (212) zumindest abschnittsweise berührt.

8. Vorrichtung (100) nach einem der Ansprüche 1 bis 7, weiterhin umfassend eine Fördervorrichtung (110) mit einer Verteilvorrichtung (120), **dadurch gekennzeichnet, dass** die Verteilvorrichtung (120) dazu eingerichtet ist, Stückgüter (200) in Stückgüter (200a) einer ersten Stückgutreihe (211), die der ersten Zufuhrvorrichtung (130) aufgegeben wird, und in Stückgüter (200b) zumindest einer zweiten Stückgutreihe (212), die der zumindest einen zweiten Zufuhrvorrichtung (140) aufgegeben wird, aufzuteilen.

9. Vorrichtung (100) nach einem der Ansprüche 1 bis 8, weiterhin umfassend eine Hubvorrichtung (300), **dadurch gekennzeichnet, dass** die Hubvorrichtung (300) unterhalb der Übergabefläche (152) angeordnet und dazu eingerichtet ist, bei geöffneter Entladeöffnung (160) eine auf der Übergabefläche (152) fertig gebildete Stückgutlage (220)als eine Stückgutlage (221, 222, 223) eines Stückgutstapels (230) aufzunehmen.

10. Verfahren zum Zusammenstellen von Stückgutlagen (220) mittels Stückgüter (200a, 200b) aus wenigstens zwei Reihen (211, 212) von Stückgütern (200a, 200b) auf einer Übergabefläche (152), wobei das Verfahren die folgenden Schritte umfasst:
- Zuführen einer Anzahl von Stückgütern (200a) einer ersten Stückgutreihe (211) an eine erste Zufuhrposition (Z1), die benachbart zu einem ersten Seitenrand (155) der Übergabefläche (152) angeordnet ist;
- Zuführen einer Anzahl von Stückgütern (200b) zumindest einer zweiten Stückgutreihe (212) an eine zweite Zufuhrposition (Z2), die benachbart zu einem zweiten Seitenrand (156, 157, 158) der Übergabefläche (152) angeordnet ist, wobei der zweite Seitenrand (156, 157, 158) unterschiedlich ist zum ersten Seitenrand (155) der Übergabefläche (152);
- Verschieben der Anzahl von Stückgütern (200a) der ersten Stückgutreihe (211) mit einem ersten Abschieber (172) entlang eines ersten Schiebewegs (SG1) von der ersten Zufuhrposition (Z1) in eine erste Übergabeposition (U1) auf der Übergabefläche (152) ;
- Verschieben der Anzahl von Stückgütern (200b) der zumindest einen zweiten Stückgutreihe (211) mit zumindest einem zweiten Abschieber (174) entlang eines zweiten Schiebewegs (SG2) von der zweiten Zufuhrposition (Z2) in eine zweite Übergabeposition (U2) auf der Übergabefläche (152), wobei die zweite Übergabeposition (U2) benachbart zur ersten Übergabeposition (U1) ist,
**dadurch gekennzeichnet, dass**
zum Formen der auf der Übergabefläche (152) aufgelegten Stückgüter (200a, 200b) zu einer Stückgutlage (220) zwei einander gegenüberliegende Ausrichtschieber (176, 178) betätigt werden.

11. Verfahren nach Anspruch 10, **dadurch gekennzeichnet, dass** die zweite Zufuhrposition (Z2) benachbart ist zu einem zweiten Seitenrand (156) der Übergabefläche (152), wobei der zweite Seitenrand (156) dem ersten Seitenrand (155) gegenüberliegt.

12. Verfahren nach Anspruch 10 oder 11, **dadurch gekennzeichnet, dass** das Zuführen von Stückgütern (200a) der ersten Stückgutreihe (211) an eine erste Zufuhrposition (Z1) sowie das Zuführen von Stückgütern (200b) der zumindest einen zweiten Stückgutreihe (212) an eine zweite Zufuhrposition (Z2) unabhängig voneinander erfolgt.

13. Verfahren nach einem der Ansprüche 10 bis 12, **dadurch gekennzeichnet, dass** das Verschieben von Stückgütern (200a) der ersten Stückgutreihe (211) mit dem ersten Abschieber (172) sowie das Verschieben von Stückgütern (200b) der zumindest einen zweiten Stückgutreihe (211) mit dem zumindest einen zweiten Abschieber (174) in zueinander entgegengesetzter Richtung erfolgt.

14. Verfahren nach einem der Ansprüche 10 bis 13, **dadurch gekennzeichnet, dass** nach dem Verschieben von Stückgütern (200a, 200b) auf die Übergabefläche (152) und gegebenenfalls nach einem Formen der auf der Übergabefläche (152) aufgelegten Stückgüter zu einer Stückgutlage (220) eine verschließbare Entladeöffnung (160) in der Übergabefläche (152) geöffnet wird, wobei die Stückgutlage (220) auf eine unterhalb der Übergabefläche (152) befindliche Auflage, vorzugsweise eine Transportpalette (310), oder auf einen Stückgutstapel (230) übergeben wird.

## Claims

1. Device (100) for assembling piece good layers (220) by means of piece goods (200a, 200b) from at least two rows (211, 212) of piece goods (200a, 200b), preferably for producing at least one piece good stack (230) with a plurality of piece good layers (220), the device (100) comprising:
- a transfer device (150) with a transfer surface (152) for assembling a piece good layer (220) from a number of piece goods (200a) of the first piece good row (211) and a number of piece goods (200b) of the second piece good row (212);
- a first feeding device (130) for feeding the number of piece goods (200a) of the first piece good row (211) to a first feed position (Z1), wherein the first feed position (Z1) is adjacent to a first side edge (155) of the transfer surface (152);
- a pusher device (170) having a first pusher (172), wherein the first pusher (172) is arranged for pushing the number of piece goods (200a) of the first piece good row (211) from the first feed position (Z1) to a first transfer position (U1) on the transfer surface (152), wherein
- at least one second feeding device (140) is provided for feeding the number of piece goods (200b) of at least one second piece good row (212) to a second feed position (Z2), wherein the second feed position (Z2) is adjacent to a second side edge (156, 157, 158) of the transfer surface (152) which is different from the first side edge (155), 158) of the transfer surface (152), and
- wherein the pusher device (170) comprises at least one second pusher (174) which is arranged to push the number of piece goods (200b) of the at least one second piece good row (212) from the second feed position (Z2) into a second transfer position (U2) on the transfer surface (152); and wherein
- a first pushing direction (AB1) of the first pusher (172) for pushing a number of piece goods (200a) of the first piece good row (211) from the first feed position (Z1) into the first transfer position (U1) on the transfer surface (152) is oriented in the opposite direction to a second pushing direction (AB2) of the at least one second pusher (172) for pushing a number of piece goods (200b) of the at least one second piece good row (212) from the second feed position (Z2) into the second transfer position (U2) on the transfer surface (152),
**characterized in that**
the pusher device (170) further comprises a first alignment pusher (176) and a second alignment pusher (178) for laterally aligning the piece goods (200a, 200b) placed on the transfer surface (152), wherein the first alignment pusher (176) is arranged along a third side edge (157) of the transfer surface (152) and the second alignment pusher (178) is arranged along a fourth side edge (158) of the transfer surface (152) opposite the third side edge (157), and wherein the two alignment pushers (176, 178) are movable in mutually opposite directions (AU1, AU2).

2. Device (100) according to claim 1, **characterized in that** the second feed position (Z2) is adjacent to a second side edge (156) of the transfer surface (152) opposite the first side edge (155).

3. Device (100) according to claim 1 or 2, **characterized in that** the first feeding device (130) is adapted to align, in the first feed position (Z1), a number of piece goods (200a) of the first piece good row (211) distributed along the first side edge (155) of the transfer surface (152), and the at least one second feeding device (140) is adapted to align a number of piece goods (200b) of the at least one second piece good row (212) distributed along the second side edge (156, 157, 158) of the transfer surface (152) in the second feed position (Z2).

4. Device (100) according to one of claims 1 to 3, **characterized in that** the first transfer position (U1) and the second transfer position (U2) are arranged on the transfer surface (152) between the first feed position (Z1) and the second feed position (Z2).

5. Device (100) according to one of claims 1 to 4, **characterized in that** a first displacement path (SG1) concerning a number of piece goods (200a) of the first piece good row (211) from the first feed position (Z1) into the first transfer position (U1) is independent of a second displacement path (SG2) concerning a number of piece goods (200b) of the at least one second piece good row (212) from the second feed position (Z2) into the second transfer position (U2) .

6. Device (100) according to one of claims 1 to 5, **characterized in that** a first partial surface (153) of the transfer surface (152), which comprises the first transfer position (U1), and a second partial surface (154) of the transfer surface (152), which comprises the second transfer position (U2), form a closable unloading opening (160), wherein the closable unloading opening (160) is preferably formed as an unloading plate (163) movable between a closed (161) and an open (162) position.

7. Device (100) according to one of claims 1 to 6, **characterized in that** the first pusher (172), during the pushing of a number of piece goods (200a) of the first piece good row (211) along a first pushing path (SG1) from the first feed position (Z1) into the first transfer position (U1), touches each piece good (200a) of the first piece good row (211) to be pushed at least in sections and/or the at least one second pusher (174), during the pushing of a number of piece goods (200b) of the at least one second piece good row (212) along a second displacement path (SG2) from the second feed position (Z2) into the second transfer position (U2), touches each piece good (200b) of the second piece good row (212) to be pushed at least in sections.

8. Device (100) according to one of claims 1 to 7, further comprising a conveying device (110) having a distributing device (120), **characterized in that** the distributing device (120) is adapted to divide piece goods (200) into piece goods (200a) of a first piece good row (211), which is fed to the first feeding device (130), and into piece goods (200b) of at least one second piece good row (212), which is fed to the at least one second feeding device (140) .

9. Device (100) according to one of claims 1 to 8, further comprising a lifting device (300), **characterized in that** the lifting device (300) is arranged below the transfer surface (152) and is adapted to receive, when the unloading opening (160) is open, a piece good layer (220) that has been completely formed on the transfer surface (152) as a piece good layer (221, 222, 223) of a piece good stack (230).

10. Method for assembling piece good layers (220) by means of piece goods (200a, 200b) from at least two rows (211, 212) of piece goods (200a, 200b) on a transfer surface (152), wherein the method comprises the following steps:
- feeding a number of piece goods (200a) of a first piece good row (211) to a first feed position (Z1), which is arranged adjacent to a first side edge (155) of the transfer surface (152);
- feeding a number of piece goods (200b) of at least a second piece good row (212) to a second feed position (Z2) which is arranged adjacent to a second side edge (156, 157, 158) of the transfer surface (152), wherein the second side edge (156, 157, 158) is different from the first side edge (155) of the transfer surface (152);
- displacing the number of piece goods (200a) of the first piece good row (211) with a first pusher (172) along a first displacement path (SG1) from the first feed position (Z1) to a first transfer position (U1) on the transfer surface (152);
- displacing the number of piece goods (200b) of the at least one second piece good row (211) with at least one second pusher (174) along a second displacement path (SG2) from the second feed position (Z2) into a second transfer position (U2) on the transfer surface (152), wherein the second transfer position (U2) is adjacent to the first transfer position (U1),
**characterized in that**
two mutually opposite alignment pushers (176, 178) are actuated to form the piece goods (200a, 200b) placed on the transfer surface (152) into a piece good layer (220).

11. Method according to claim 10, **characterized in that** the second feed position (Z2) is adjacent to a second side edge (156) of the transfer surface (152), wherein the second side edge (156) is opposite the first side edge (155).

12. Method according to claim 10 or 11, **characterized in that** the feeding of piece goods (200a) of the first piece good row (211) to a first feed position (Z1) and the feeding of piece goods (200b) of the at least one second piece good row (212) to a second feed position (Z2) take place independently of one another.

13. Method according to one of claims 10 to 12, **characterized in that** the displacement of piece goods (200a) of the first piece good row (211) with the first pusher (172) and the displacement of piece goods (200b) of the at least one second piece good row (211) with the at least one second pusher (174) take place in opposite directions to each other.

14. Method according to one of claims 10 to 13, **characterized in that** after the displacement of piece goods (200a, 200b) onto the transfer surface (152) and, optionally, after the piece goods placed on the transfer surface (152) have been formed into a piece good layer (220), a closable unloading opening (160) in the transfer surface (152) is opened, wherein the piece good layer (220) is transferred onto a support located below the transfer surface (152), preferably a transport pallet (310), or onto a piece good stack (230).

## Revendications

1. Dispositif (100) pour composer des couches d'articles unitaires (220) au moyen d'articles unitaires (200a, 200b) provenant d'au moins deux rangées (211, 212) d'articles unitaires (200a, 200b), de préférence pour former au moins une pile d'articles unitaires (230) avec plusieurs couches d'articles unitaires (220), lequel dispositif (100) comprend :
- un dispositif de transfert (150) muni d'une surface de transfert (152) pour composer une couche d'articles unitaires (220) à partir d'un certain nombre d'articles unitaires (200a) de la première rangée d'articles unitaires (211) et d'un certain nombre d'articles unitaires (200b) de la deuxième rangée d'articles unitaires (212) ;
- un premier dispositif d'arrivée (130) pour l'arrivée du nombre d'articles unitaires (200a) de la première rangée d'articles unitaires (211) dans une première position d'arrivée (Z1), laquelle première position d'arrivée (Z1) est voisine d'un premier bord latéral (155) de la surface de transfert (152) ;
- un dispositif de poussée (170) avec un premier poussoir (172), lequel premier poussoir (172) est configuré pour pousser le nombre d'articles unitaires (200a) de la première rangée d'articles unitaires (211) de la position d'arrivée (Z1) à une première position de transfert (U1) sur la surface de transfert (152),
- au moins un deuxième dispositif d'arrivée (140) étant prévu pour l'arrivée du nombre d'articles unitaires (200b) d'au moins une deuxième rangée d'articles unitaires (212) dans une deuxième position d'arrivée (Z2), la deuxième position d'arrivée (Z2) étant voisine d'un deuxième bord latéral (156, 157, 158) de la surface de transfert (152) différent du premier bord latéral (155), et
- le dispositif de poussée (170) comprenant au moins un deuxième poussoir (174) configuré pour pousser le nombre d'articles unitaires (200b) de l'au moins une deuxième rangée d'articles unitaires (212) de la deuxième position d'arrivée (Z2) à une deuxième position de transfert (U2) sur la surface de transfert (152), et
- une première direction de poussée (AB1) du premier poussoir (172) pour pousser un certain nombre d'articles unitaires (200a) de la première rangée d'articles unitaires (211) de la première position d'arrivée (Z1) à la première position de transfert (U1) sur la surface de transfert (152) étant orientée en sens inverse d'une deuxième direction de poussée (AB2) de l'au moins un deuxième poussoir (172) pour pousser un certain nombre d'articles unitaires (200b) de l'au moins une deuxième rangée d'articles unitaires (212) de la position d'arrivée (Z2) à la deuxième position de transfert (U2) sur la surface de transfert (152),
**caractérisé en ce que** le dispositif de poussée (170) comprend en outre un premier poussoir d'orientation (176) et un deuxième poussoir d'orientation (178) pour l'orientation latérale des articles unitaires (200a, 200b) posés sur la surface de transfert (152), le premier poussoir d'orientation (176) étant disposé le long d'un troisième bord latéral (157) de la surface de transfert (152) et le deuxième poussoir d'orientation (178) le long d'un quatrième bord latéral (158) de la surface de transfert (152) faisant face au troisième bord latéral, et les deux poussoirs d'orientation (176, 178) pouvant être déployés dans des directions opposées (AU1, AU2).

2. Dispositif (100) selon la revendication 1, **caractérisé en ce que** la deuxième position d'arrivée (Z2) est voisine du deuxième bord latéral (156) de la surface de transfert (152) faisant face au premier bord latéral (155).

3. Dispositif (100) selon la revendication 1 ou 2, **caractérisé en ce que** le premier dispositif d'arrivée (130) est configuré pour répartir et orienter un certain nombre d'articles unitaires (200a) de la première rangée d'articles unitaires (211) le long du premier bord latéral (155) de la surface de transfert (152) dans la première position d'arrivée (Z1), et l'au moins un deuxième dispositif d'arrivée (140) est conformé pour répartir et orienter un certain nombre d'articles unitaires (200b) de l'au moins une deuxième rangée d'articles unitaires (212) le long du deuxième bord latéral (156, 157, 158) de la surface de transfert (152) dans la deuxième position d'arrivée (Z2).

4. Dispositif (100) selon l'une des revendications 1 à 3, **caractérisé en ce que** la première position de transfert (U1) et la deuxième position de transfert (U2) sur la surface de transfert (152) sont disposées entre la première position d'arrivée (Z1) et la deuxième position d'arrivée (Z2).

5. Dispositif (100) selon l'une des revendications 1 à 4, **caractérisé en ce qu'**un premier trajet de translation (SG1) amenant un certain nombre d'articles unitaires (200a) de la première rangée d'articles unitaires (211) de la première position d'arrivée (Z1) à la première position de transfert (U1) est indépendant d'un deuxième trajet de translation (SG2) amenant un certain nombre d'articles unitaires (200b) de l'au moins une deuxième rangée d'articles unitaires (212) de la deuxième position d'arrivée (Z2) à la deuxième position de transfert (U2).

6. Dispositif (100) selon l'une des revendications 1 à 5, **caractérisé en ce qu'**une première surface partielle (153) de la surface de transfert (152), qui inclut la première position de transfert (U1), et une deuxième surface partielle (154) de la surface de transfert (152), qui inclut la deuxième position de transfert (U2), forment une ouverture de déchargement refermable (160), l'ouverture de déchargement refermable (160) étant de préférence formée comme un plateau de déchargement (163) qui peut être déplacé entre une position fermée (161) et une position ouverte (162).

7. Dispositif (100) selon l'une des revendications 1 à 6, **caractérisé en ce que** le premier poussoir (172), pendant qu'il pousse un certain nombre d'articles unitaires (200a) de la première rangée d'articles unitaires (211) le long d'un premier trajet de translation (SG1) de la première position d'arrivée (Z1) à la première position de transfert (U1), touche au moins en partie chaque article unitaire (200a) à déplacer de la première rangée d'articles unitaires (211) et/ou l'au moins un deuxième poussoir (174), pendant qu'il pousse un certain nombre d'articles unitaires (200b) de l'au moins une deuxième rangée d'articles unitaires (212) le long d'un deuxième trajet de translation (SG2) de la deuxième position d'arrivée (Z2) à la deuxième position de transfert (U2), touche au moins en partie chaque article unitaire (200b) à déplacer de la deuxième rangée d'articles unitaires (212).

8. Dispositif (100) selon l'une des revendications 1 à 7, comprenant en outre un dispositif de transport (110) muni d'un dispositif de répartition (120), **caractérisé en ce que** le dispositif de répartition (120) est configuré pour répartir des articles unitaires (200) en articles unitaires (200a) d'une première rangée d'articles unitaires (211) qui est amenée au premier dispositif d'arrivée (130) et articles unitaires (200b) d'au moins une deuxième rangée d'articles unitaires (212) qui est amenée à l'au moins un dispositif d'arrivée (140).

9. Dispositif (100) selon l'une des revendications 1 à 8, comprenant en outre un dispositif de levage (300), **caractérisé en ce que** le dispositif de levage (300) est disposé en dessous de la surface de transfert (152) et configuré pour recevoir, quand l'ouverture de déchargement (160) est ouverte, une couche d'articles unitaires (220) formée sur la surface de transfert (152) sous la forme d'une couche d'articles unitaires (221, 222, 223) d'une pile d'articles unitaires (230).

10. Procédé pour composer des couches d'articles unitaires (220) au moyen d'articles unitaires (200a, 200b) provenant d'au moins deux rangées (211, 212) d'articles unitaires (200a, 200b) sur une surface de transfert (152), lequel procédé comprend les étapes suivantes :
- acheminement d'un certain nombre d'articles unitaires (200a) d'une première rangée d'articles unitaires (211) vers une première position d'arrivée (Z1) voisine d'un premier bord latéral (155) de la surface de transfert (152) ;
- acheminement d'un certain nombre d'articles unitaires (200b) d'au moins une deuxième rangée d'articles unitaires (212) vers une position d'arrivée (Z2) voisine d'un deuxième bord latéral (156, 157, 158) de la surface de transfert (152), le deuxième bord latéral (156, 157, 158) étant différent du premier bord latéral (155) de la surface de transfert (152) ;
- translation du nombre d'articles unitaires (200a) de la première rangée d'articles unitaires (211) avec un premier poussoir (172) le long d'un premier trajet de translation (SG1) de la première position d'arrivée (Z1) à une première position de transfert (U1) sur la surface de transfert (152) ;
- translation du nombre d'articles unitaires (200b) de l'au moins une deuxième rangée d'articles unitaires (211) avec au moins un deuxième poussoir (174) le long d'un deuxième trajet de translation (SG2) de la deuxième position d'arrivée (Z2) à une deuxième position de transfert (U2) sur la surface de transfert (152), la deuxième position de transfert (U2) étant voisine de la première position de transfert (U1),
**caractérisé en ce que** deux poussoirs d'orientation (176, 178) situés l'un en face de l'autre sont actionnés pour former une couche d'articles unitaires (220) avec les articles unitaires (200a, 200b) posés sur la surface de transfert (152).

11. Procédé selon la revendication 10, **caractérisé en ce que** la deuxième position d'arrivée (Z2) est voisine d'un deuxième bord latéral (156) de la surface de transfert (152), lequel deuxième bord latéral (156) fait face au premier bord latéral (155).

12. Procédé selon la revendication 10 ou 11, **caractérisé en ce que** l'arrivée des articles unitaires (200a) de la première rangée d'articles unitaires (211) vers une première position d'arrivée (Z1) et l'arrivée des articles unitaires (200b) de l'au moins une deuxième rangée d'articles unitaires (212) vers une deuxième position d'arrivée (Z2) sont indépendantes l'une de l'autre.

13. Procédé selon l'une des revendications 10 à 12, **caractérisé en ce que** la translation d'articles unitaires (200a) de la première rangée d'articles unitaires (211) est réalisée avec le premier poussoir (172) et la translation d'articles unitaires (200b) de l'au moins une deuxième rangée d'articles unitaires (211) avec l'au moins un deuxième poussoir (174) dans des directions opposées l'une à l'autre.

14. Procédé selon l'une des revendications 10 à 13, **caractérisé en ce que**, après la translation d'articles unitaires (200a, 200b) sur la surface de transfert (152) et, le cas échéant, après la formation d'une couche d'articles unitaires (220) avec les articles unitaires posés sur la surface de transfert (152), une ouverture de déchargement refermable (160) est ouverte dans la surface de transfert (152), la couche d'articles unitaires (220) étant alors transférée sur un support situé en dessous de la surface de transfert (152), de préférence une palette de transport (310), ou sur une pile d'articles unitaires (230).
